(19) Europäisches Patentamt
European Patent Office
Office européen des brevets

(11) **EP 4 020 652 A1**

(12) # EUROPEAN PATENT APPLICATION
published in accordance with Art. 153(4) EPC


(43) Date of publication:
**29.06.2022 Bulletin 2022/26**

(21) Application number: **19957376.7**

(22) Date of filing: **25.12.2019**

(51) International Patent Classification (IPC):
***H01M 10/0567*** *(2010.01)* ***H01M 4/583*** *(2010.01)*
***H01M 4/62*** *(2006.01)*

(52) Cooperative Patent Classification (CPC):
**H01M 10/0525; H01M 4/13; H01M 4/622; H01M 10/0567; H01M 10/0569;** H01M 4/133; H01M 2004/027; H01M 2300/004; H01M 2300/0042; Y02E 60/10

(86) International application number:
**PCT/CN2019/128447**

(87) International publication number:
**WO 2021/128094 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Ningde Amperex Technology Limited**
**Ningde, Fujian 352100 (CN)**

(72) Inventor: **WANG, Kefei**
**Ningde, Fujian 352100 (CN)**

(74) Representative: **Klunker IP Patentanwälte PartG mbB**
**Destouchesstraße 68**
**80796 München (DE)**


(54) ## ELECTROCHEMICAL DEVICE AND ELECTRONIC DEVICE COMPRISING SAME


(57) The present application relates to an electrochemical device and an electronic device including the same. Specifically, the present application provides an electrochemical device, including a cathode, an electrolyte and an anode. The electrolyte includes at least one of the following compounds: a) propionate; b) a compound having a cyano group(s); c) lithium difluorophosphate; or d) a compound of Formula 1:

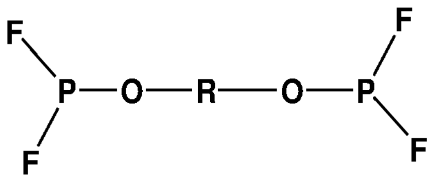
Formula 1,

where, R is substituted or unsubstituted $C_1$-$C_{10}$ hydrocarbyl, and when substituted, the substituent is halogen. The anode includes an anode active material layer, and a contact angle of the anode active material layer relative to a non-aqueous solvent is not greater than 60° as measured by a contact angle measurement. The electrochemical device has improved cycle performance and high-temperature storage performance.


EP 4 020 652 A1

## Description

## BACKGROUND

### 1. Technical Field

The present application relates to the technical field of energy storage, more particularly to an electrochemical device and an electronic device including the same, and more specifically to a lithium-ion battery.

### 2. Description of the Related Art

With the development of technology and the increasing demand for mobile devices, the demand for electrochemical devices (for example, lithium-ion batteries) has increased significantly. A lithium-ion battery that simultaneously has high energy density and excellent service life and cycle performance is an important research pursuit.
The theoretical capacity of a lithium-ion battery may vary with the type of the anode active material. As the cycle progresses, lithium-ion batteries generally have a decrease in charge/discharge capacity, causing a deterioration in the performance of the lithium-ion batteries. In recent years, in the manufacture of the lithium-ion batteries, in order to reduce environmental impact and the like, aqueous slurry compositions using an aqueous medium as a dispersion medium have received more and more attention. However, due to the presence of bubbles in the slurry composition, the aqueous slurry may produce defects such as multiple pinholes and pits in the active material layer, thereby affecting the cycle performance and high-temperature storage performance of the electrochemical device.
In view of this, it is indeed necessary to provide an improved electrochemical device having excellent cycle performance and high-temperature storage performance and an electronic device including the same.

## SUMMARY

Embodiments of the present application provide an electrochemical device and an electronic device including the same to solve at least one problem in the related art to at least some extent.
In one aspect of the present application, the present application provides an electrochemical device, including a cathode, an electrolyte and an anode, wherein the electrolyte includes at least one of the following compounds:

a) propionate;

b) a compound having a cyano group(s);

c) lithium difluorophosphate; or

d) a compound of Formula 1:

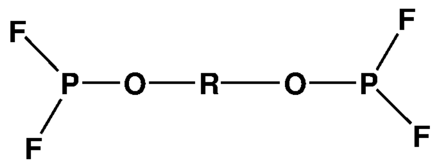

Formula 1,

wherein:

R is substituted or unsubstituted $C_1$-$C_{10}$ hydrocarbyl, and when substituted, the substituent is halogen; and

the anode includes an anode active material layer, and a contact angle of the anode active material layer relative to a non-aqueous solvent is not greater than 60° as measured by a contact angle measurement.

According to some embodiments of the present application, the droplet diameter of the non-aqueous solvent on the anode active material layer is not greater than 30 mm as measured by a contact angle measurement.
According to some embodiments of the present application, the contact angle measurement means that after a 3-microliter droplet of diethyl carbonate is dropwise added to a surface of the anode active material layer, the contact angle of the droplet on the surface of the anode active material layer is tested within 100 seconds.

According to some embodiments of the present application, the anode active material layer further include an auxiliary agent, the auxiliary agent having at least one of the following features:

a) an oxidation potential of not less than 4.5 V and a reduction potential of not greater than 0.5 V; or

b) a surface tension of not greater than 30 mN/m.

According to some embodiments of the present application, the anode active material layer further includes a nonionic surfactant.

According to some embodiments of the present application, based on a total weight of the anode active material layer, a content of the auxiliary agent or the nonionic surfactant is less than 3,000 ppm.

According to some embodiments of the present application, the auxiliary agent includes at least one of polyoxyethylene ether, polyol ester, amide, block polyether, peregal, polyether or sodium hexadecylbenzenesulfonate; preferably at least one of the following: polyoxyethylene alkanolamide, octyl phenol polyoxyethylene ether, nonyl phenol polyoxyethylene ether, higher fatty alcohol polyoxyethylene ether, polyoxyethylene fatty acid ester, polyoxyethylene amine, alkanolamide, polyoxyethylene lauryl ether, C12-14 primary alcohol polyoxyethylene ether, C12-14 secondary alcohol polyoxyethylene ether, branched C13 Guerbet alcohol polyoxyethylene ether, branched C10 Guerbet alcohol polyoxyethylene, linear C10 alcohol polyoxyethylene ether, linear C8 octanol polyoxyethylene ether, linear C8 isooctanol polyoxyethylene ether, fatty acid monoglyceride, glycerin monostearate, fatty acid sorbitan ester, composite silicone polyether compound, polysorbate, polyoxyethylene fatty acid ester, polyoxyethylene fatty alcohol ether, polyoxyethylene-polyoxypropylene block copolymer, polyether modified trisiloxane or polyether modified organosilicon polyether siloxane.

According to some embodiments of the present application, the propionate has Formula 2:

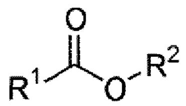 Formula 2,

wherein:

$R^1$ is selected from ethyl or haloethyl, and

$R^2$ is selected from $C_1$-$C_6$ alkyl or $C_1$-$C_6$ haloalkyl.

According to some embodiments of the present application, the propionate includes at least one of methyl propionate, ethyl propionate, propyl propionate, butyl propionate or amyl propionate.

According to some embodiments of the present application, the compound having a cyano group(s) includes a structure of at least one of Formula 3, Formula 4, Formula 5 or Formula 6:

$A^1$-CN Formula 3,

NC-$A^2$-CN Formula 4,

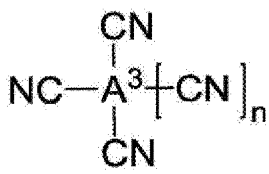 Formula 5,

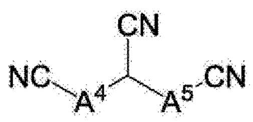 Formula 6,

wherein:

$A^1$ is selected from the group consisting of $C_{2-20}$ alkyl, $C_{2-20}$ haloalkyl, $C_{2-20}$ alkenyl, $C_{2-20}$ haloalkenyl, $C_{2-20}$ alkynyl, $C_{2-20}$ haloalkynyl, $C_{6-30}$ aryl and $C_{6-30}$ haloaryl;

$A^2$ is selected from the group consisting of $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene, $C_{6-30}$ haloarylene, carbonyl, sulfonyl, sulfinyl, ether, thioether, dialkyl borate and boryl;

$A^3$ is selected from the group consisting of $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene, $C_{6-30}$ haloarylene and $C_{2-20}$ alkoxy; when substituted, the substituent is halogen;

$A^4$ and $A^5$ are each independently selected from the group consisting of $C_{1-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene and $C_{6-30}$ haloarylene; and

n is an integer from 0 to 5.

According to some embodiments of the present application, the compound having a cyano group(s) is selected from at least one of the following: succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,4-dicyanopentane, 1,2-dicyanobenzene, 1,3-dicyanobenzene, 1,4-dicyanobenzene, ethylene glycol bis(propionitrile)ether, 3,5-dioxa-heptanedinitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane or 1,2,5-tris(cyanoethoxy)pentane.

According to some embodiments of the present application, the compound of Formula 1 includes at least one of 1,2-bis(difluorophosphoryloxy)ethane, 1,2-bis(difluorophosphoryloxy)propane or 1,2-bis(difluorophosphoryloxy)butane.

In another aspect of the present application, the present application provides an electronic device, including the electrochemical device according to the present application.

Additional aspects and advantages of the embodiments of the present application will be described or shown in the following description or interpreted by implementing the embodiments of the present application.

## DETAILED DESCRIPTION

Embodiments of the present application will be described in detail below. The embodiments of the present application should not be interpreted as limitations to the present application.

Unless otherwise expressly indicated, the following terms used herein have the meanings indicated below.

In the detailed description and claims, a list of items connected by the term "at least one of" may mean any combination of the listed items. For example, if items A and B are listed, then the phrase "at least one of A and B" means only A; only B; or A and B. In another example, if items A, B and C are listed, then the phrase "at least one of A, B and C" means only A; only B; only C; A and B (excluding C); A and C (excluding B); B and C (excluding A); or all of A, B and C. Item A may include a single element or multiple elements. Item B may include a single element or multiple elements. Item C may include a single element or multiple elements. The term "at least one of" has the same meaning as the term "at least one of the following".

As used herein, the term "hydrocarbyl" covers alkyl, alkenyl and alkynyl.

As used herein, the term "alkyl" is intended to be a linear saturated hydrocarbon structure having 1 to 20 carbon atoms. "Alkyl" is also intended to be a branched or cyclic hydrocarbon structure having 3 to 20 carbon atoms. When an alkyl having a specific carbon number is specified, it is intended to cover all geometric isomers having that carbon number; therefore, for example, "butyl" means to include n-butyl, sec-butyl, isobutyl, tert-butyl and cyclobutyl; and "propyl" includes n-propyl, isopropyl and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isoamyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl and the like.

As used herein, the term "alkenyl" refers to a monovalent unsaturated hydrocarbyl group which may be linear or branched and which has at least one and typically 1, 2 or 3 carbon-carbon double bonds. Unless otherwise defined, the alkenyl typically contains 2 to 20 carbon atoms and includes (for example) $-C_{2-4}$ alkenyl, $-C_{2-6}$ alkenyl and $-C_{2-10}$ alkenyl. Representative alkenyl includes (for example) ethenyl, n-propenyl, isopropenyl, n-but-2-enyl, but-3-enyl, n-hex-3-enyl and the like.

As used herein, the term "alkenyl" refers to a monovalent unsaturated hydrocarbyl group which may be linear or branched and which has at least one and typically has 1, 2 or 3 carbon-carbon triple bonds. Unless otherwise defined, the alkynyl typically contains 2 to 20 carbon atoms and includes (for example) $-C_{2-4}$ alkynyl, $-C_{3-6}$ alkynyl and $-C_{3-10}$ alkynyl. Representative alkynyl includes (for example) ethynyl, prop-2-ynyl(n-propynyl), n-but-2-ynyl, n-hex-3-ynyl and the like.

As used herein, the term "aryl" refers to a monovalent aromatic hydrocarbon having a monocyclic (for example, phenyl) or fused ring. A fused ring system includes those completely unsaturated ring systems (for example, naphthalene) and those partially unsaturated ring systems (for example, 1,2,3,4-tetrahydronaphthalene). Unless otherwise defined, the aryl typically contains 6 to 26 carbon ring atoms and includes (for example) $-C_{6-10}$ aryl. Representative aryl includes (for example) phenyl, methylphenyl, propylphenyl, isopropylphenyl, benzyl, naphthalen-1-yl, naphthalen-2-yl and the like.

As used herein, the term "alkylene" refers to a divalent saturated hydrocarbyl that may be linear or branched. Unless otherwise defined, the alkylene typically contains 2 to 10 carbon atoms and includes (for example) $-C_{2-3}$ alkylene and $-C_{2-6}$ alkylene-. Representative alkylene includes (for example) methylene, ethane-1,2-diyl ("ethylene"), propane-1,2-diyl, propane-1,3-diyl, butane-1,4-diyl, pentane-1,5-diyl and the like.

As used herein, the term "alkenylene" refers to a difunctional group obtained by removing one hydrogen atom from the alkenyl defined above. Preferred alkenylene includes, but is not limited to, -CH=CH-, - $C(CH_3)=CH-$, $-CH=CHCH_2-$ and the like.

As used herein, the term "alkynylene" refers to a difunctional group obtained by removing one hydrogen atom from the alkynyl defined above. Preferred alkynylene includes, but is not limited to, -C=C-, $-C\equiv C-CH_2-$ and the like.

As used herein, the term "arylene" covers both monocyclic and polycyclic systems. A polycyclic ring may have two or more rings in which two carbons are shared by two adjacent rings (the rings are "fused"), in which at least one of the rings is aromatic and other rings may be, for example, cycloalkyl, cycloalkenyl, aryl, a heterocyclic ring and/or heteroaryl. For example, the arylene may be $C_6$-$C_{50}$ arylene, $C_6$-$C_{40}$ arylene, $C_6$-$C_{30}$ arylene, $C_6$-$C_{26}$ arylene, $C_6$-$C_{20}$ arylene or $C_6$-$C_{10}$ arylene.

As used herein, the term "cyano" covers -CN and an organic substance containing an organic group -CN.

As used herein, the term "halo" refers to substitution with a stable atom belonging to Group 17 of the periodic table of elements (for example, fluorine, chlorine, bromine or iodine).

The theoretical capacity of an electrochemical device (for example, a lithium-ion battery) may vary with the type of the anode active material. As the cycle progresses, the electrochemical device generally has a decrease in charge/discharge capacity. This is because the electrode interface of the electrochemical device varies during charging and/or discharging, resulting in that the electrode active material cannot perform its function.

The present application ensures the interface stability of the electrochemical device during the cycle by using a combination of a specific anode material and a specific electrolyte, thereby enhancing the cycle performance and high-temperature storage performance of the electrochemical device.

The specific anode material of the present application is achieved by controlling the contact angle of the surface of the anode active material layer. As a control method of the contact angle, the contact angle may be controlled by adding an auxiliary agent to the anode slurry or disposing an auxiliary agent coating on the surface of the anode active material layer.

In one embodiment, the present application provides an electrochemical device, including a cathode, an anode and an electrolyte as described below.

## I. Anode

The anode includes an anode current collector and an anode active material layer disposed on one or two surfaces of the anode current collector.

### 1. Anode active material layer

The anode active material layer includes an anode active material. There may be one or multiple anode active material layers, and each of the multiple anode active material layers may include the same or different anode active materials. The anode active material is any material that can reversibly intercalate and deintercalate lithium ions and other metal ions. In some embodiments, the chargeable capacity of the anode active material is greater than the discharge capacity of a cathode active material to prevent the lithium metal from unintentionally precipitating on the anode during

charging.

(1) Contact angle

One main feature of the electrochemical device of the present application is that the contact angle of the anode active material layer relative to a non-aqueous solvent is not greater than 60° as measured by a contact angle measurement. In some embodiments, a contact angle of the anode active material layer relative to a non-aqueous solvent is not greater than 50° as measured by a contact angle measurement. In some embodiments, a contact angle of the anode active material layer relative to a non-aqueous solvent is not greater than 30° as measured by a contact angle measurement. When the anode active material layer has a contact angle as described above relative to the non-aqueous solvent, the interface of the anode active material layer has fewer defects, has good stability during the charge and discharge cycle of the electrochemical device, and can ensure good cycle performance and high-temperature storage performance of the electrochemical device.

The contact angle of the anode active material layer relative to the non-aqueous solvent may reflect surface properties of the anode active material layer, and is one of the physicochemical parameters that characterizes the anode active material layer. The smaller the contact angle, the smoother the surface of the anode active material layer and the fewer pinhole or pit defects there are, so that the cycle performance and high-temperature storage performance of the electrochemical device can be significantly improved. The contact angle of the anode active material layer relative to the non-aqueous solvent may be affected by multiple factors, including the auxiliary agent, the porosity of the anode active material layer and the like.

According to some embodiments of the present application, the contact angle measurement means that after a 3-microliter droplet of diethyl carbonate is dropwise added to the surface of the anode active material layer, the contact angle of the droplet on the surface of the anode active material layer is tested within 100 seconds.

According to some embodiments of the present application, a droplet diameter of the non-aqueous solvent on the anode active material layer is not greater than 30 mm as measured by a contact angle measurement. In some embodiments, a droplet diameter of the non-aqueous solvent on the anode active material layer is not greater than 20 mm as measured by a contact angle measurement. In some embodiments, a droplet diameter of the non-aqueous solvent on the anode active material layer is not greater than 15 mm as measured by a contact angle measurement. In some embodiments, a droplet diameter of the non-aqueous solvent on the anode active material layer is not greater than 10 mm as measured by a contact angle measurement. When the anode active material layer has the above-mentioned contact angle relative to the non-aqueous solvent and at the same time the non-aqueous solvent has the above-mentioned droplet diameter, the cycle performance and high-temperature storage performance of the electrochemical device are further enhanced.

The contact angle of the anode active material layer relative to the non-aqueous solvent and the droplet diameter of the non-aqueous solvent can be measured by the following method: 3 microliters of diethyl carbonate are dropwise added to the surface of the anode active material layer, the droplet diameter is tested by using a JC2000D3E contact angle measuring instrument within 100 seconds, and a 5-point fitting method (that is, 2 points on the left and right planes of the droplet are taken first to determine a liquid-solid interface, and then 3 points are taken on the arc of the droplet) is used for fitting to obtain the contact angle of the anode active material layer relative to the non-aqueous solvent. Each sample is measured at least 3 times, and at least 3 data samples with a difference of less than 5° are selected and averaged to obtain the contact angle of the anode active material layer relative to the non-aqueous solvent.

The non-aqueous solvent used in the contact angle test may be diethyl carbonate, ethyl methyl carbonate, dimethyl carbonate, methyl propyl carbonate, methyl isopropyl carbonate or other common electrolyte solvents.

(2) Porosity

According to some embodiments of the present application, a porosity of the anode active material layer is 10% to 60%. In some embodiments, a porosity of the anode active material layer is 15% to 50%. In some embodiments, a porosity of the anode active material layer is 20% to 40%. In some embodiments, the porosity of the anode active material layer is 25% to 30%. In some embodiments, a porosity of the anode active material layer is 10%, 15%, 20%, 25%, 30%, 35%, 40%, 45%, 50%, 55%, 60% or within a range formed by any two of the above values.

The porosity of the anode active material layer may be measured by the following method: an AccuPyc II 1340 true density tester is used for testing, each sample is measured at least 3 times, and at least 3 data samples are selected and averaged. The porosity of the anode active material layer is calculated according to the following formula: porosity = $(V1-V2)/V1\times100\%$, wherein VI is the apparent volume, VI = sample surface areaxsample thicknessxnumber of the samples; V2 is the true volume.

(3) Carbon material

According to some embodiments of the present application, the anode active material layer includes a carbon material.

According to some embodiments of the present application, the anode active material layer includes at least one of artificial graphite, natural graphite, mesophase carbon microspheres, soft carbon, hard carbon and amorphous carbon.

According to some embodiments of the present application, the carbon material has amorphous carbon on the surface.

According to some embodiments of the present application, the shape of the carbon material includes, but is not limited to, fibrous, spherical, granular, and scaly.

According to some embodiments of the present application, the carbon material has at least one of the following features:

(a) a specific surface area (BET) of less than 5 m2/g; or

(b) a median particle size (D50) of 5 μm to 30 μm.

Specific surface area (BET)

In some embodiments, the carbon material has a specific surface area of less than 5 $m^2$/g. In some embodiments, the carbon material has a specific surface area of less than 3 $m^2$/g. In some embodiments, the carbon material has a specific surface area of less than 1 $m^2$/g. In some embodiments, the carbon material has a specific surface area of greater than 0.1 $m^2$/g. In some embodiments, the carbon material has a specific surface area of less than 0.7 $m^2$/g. In some embodiments, the carbon material has a specific surface area of less than 0.5 $m^2$/g. In some embodiments, the specific surface area of the carbon material is within a range formed by any two of the above values. When the specific surface area of the carbon material is within the above range, the precipitation of lithium on the electrode surface can be suppressed, and the production of gas caused by the reaction of the anode and the electrolyte can be suppressed.

The specific surface area (BET) of the carbon material may be measured by the following method: an Okura Riken surface area meter (a full automatic surface area measuring device manufactured by Okura Riken) is used, the sample is pre-dried at 350°C for 15 minutes under nitrogen flow, and then a nitrogen-helium mixed gas of which the relative pressure value of nitrogen relative to atmospheric pressure is accurately adjusted to 0.3 is used for measurement by a nitrogen adsorption BET single-point method using a gas flow method.

Median particle size (D50)

The median particle size (D50) of the carbon material refers to a volume-based average particle size obtained by a laser diffraction/scattering method. In some embodiments, the carbon material has a median particle size (D50) of 5 μm to 30 μm. In some embodiments, the carbon material has a median particle size (D50) of 10 μm to 25 μm. In some embodiments, the carbon material has a median particle size (D50) of 15 μm to 20 μm. In some embodiments, the carbon material has a median particle size (D50) of 1 μm, 3 μm, 5 μm, 7 μm, 10 μm, 15 μm, 20 μm, 25 μm, 30 μm or within a range formed by any two of the above values. When the median particle size of the carbon material is within the above range, the irreversible capacity of the electrochemical device is small, and the anode can be easily coated uniformly.

The median particle size (D50) of the carbon material may be measured by the following method: the carbon material is dispersed in a 0.2 wt% aqueous solution (10 mL) of polyoxyethylene (20) sorbitan monolaurate, and a HORIBA LA-700 laser diffraction/scattering particle size distribution meter is used for testing.

X-ray diffraction pattern parameters

According to some embodiments of the present application, based on an X-ray diffraction pattern of the Gakushin method, an interlayer distance of the lattice plane (002 plane) of the carbon material is within a range of 0.335 nm to 0.360 nm, within a range of 0.335 nm to 0.350 nm or within a range of 0.335 nm to 0.345 nm.

According to some embodiments of the present application, based on an X-ray diffraction pattern of the Gakushin method, a crystallite size (Lc) of the carbon material is greater than 1.0 nm or greater than 1.5 nm.

Tap density

In some embodiments, a tap density of the carbon material is greater than 0.1 $g/cm^3$, greater than 0.5 $g/cm^3$, greater than 0.7 $g/cm^3$ or greater than 1 $g/cm^3$. In some embodiments, a tap density of the carbon material is less than 2 $g/cm^3$, less than 1.8 $g/cm^3$ or less than 1.6 $g/cm^3$. In some embodiments, the tap density of the carbon material is within a range formed by any two of the above values. When the tap density of the carbon material is within the above range, the capacity of the electrochemical device can be increased, and at the same time, the increase in resistance between the carbon material particles can be suppressed.

The tap density of the carbon material may be tested by the following method: after the sample passes through a sieve with a mesh size of 300 $\mu m$, it is dropped into a 20 $cm^3$ tapping tank until the upper end surface of the tank is filled with the sample, a powder density measuring device (for example, a Seishin tap sensor) is used to perform 1,000 vibrations with a stroke length of 10 mm, and the tap density is calculated according to the mass at this time and the mass of the sample.

Orientation ratio

In some embodiments, an orientation ratio of the carbon material is greater than 0.005, greater than 0.01 or greater than 0.015. In some embodiments, an orientation ratio of the carbon material is less than 0.67. In some embodiments, the orientation ratio of the carbon material is within a range formed by any two of the above values. When the orientation ratio of the carbon material is within the above range, the electrochemical device can have excellent high-density charge and discharge characteristics.

The orientation ratio of the carbon material may be measured by X-ray diffraction after performing extrusion forming on the sample: 0.47 g of the sample is fed into a forming machine with a diameter of 17 mm and compressed under 58.8 $MN \cdot m^{-2}$ to obtain a formed body, the formed body is fixed with clay such that the formed body and the surface of a sample holder for measurement are on the same plane, and thereby, an X-ray diffraction measurement is performed. The ratio represented by (110) diffraction peak intensity/(004) diffraction peak intensity is calculated from the obtained peak intensities of (110) diffraction and (004) diffraction of carbon.

X-ray diffraction measurement conditions are as follows:

• Target: Cu(K$\alpha$-ray) graphite monochromator
• Slits: divergence slit = 0.5 degrees; light receiving slit = 0.15 mm; scatter slit = 0.5 degrees
• Measuring range and step angle/measurement time ("2$\theta$" represents the diffraction angle):

(110) plane: 75 degrees$\leq 2\theta \leq$80 degrees    1 degree/60 seconds
(004) plane: 52 degrees$\leq 2\theta \leq$57 degrees    1 degree/60 seconds

Length-to-thickness ratio

In some embodiments, a length-to-thickness ratio of the carbon material is greater than 1, greater than 2 or greater than 3. In some embodiments, a length-to-thickness ratio of the carbon material is less than 10, less than 8 or less than 5. In some embodiments, the length-to-thickness ratio of the carbon material is within a range formed by any two of the above values.

When the length-to-thickness ratio of the carbon material is within the above range, a more uniform coating can be performed, and thus the electrochemical device can have excellent high-current-density charge and discharge characteristics.

(4) Trace elements

According to some embodiments of the present application, the anode active material layer further includes at least one metal of molybdenum, iron and copper. These metal elements may react with some organic substances with poor conducting power in the anode active material, thereby facilitating film formation on the surface of the anode active material.

According to some embodiments of the present application, the above metal elements are present in the anode active material layer in a trace amount, and excessive metal elements easily form non-conductive byproducts adhered to the surface of the anode. In some embodiments, based on a total weight of the anode active material layer, a content of the at least one metal is not greater than 0.05 wt%. In some embodiments, the content of the at least one metal is not greater than 0.03 wt%. In some embodiments, the content of the at least one metal is not greater than 0.01 wt%.

(5) Auxiliary agent

According to some embodiments of the present application, the anode active material layer further includes an auxiliary agent.
According to some embodiments of the present application, the auxiliary agent has at least one of the following features:

(a) an oxidation potential of not less than 4.5 V and a reduction potential of not greater than 0.5 V; or

(b) a surface tension of not greater than 30 mN/m.

Oxidation/reduction potential

In some embodiments, the auxiliary agent has an oxidation potential of not less than 4.5 V and a reduction potential of not greater than 0.5 V. In some embodiments, the auxiliary agent has an oxidation potential of not less than 5 V and a reduction potential of not greater than 0.3 V. The auxiliary agent having the above oxidation/reduction potential has stable electrochemical performance, which helps to improve the cycle performance and high-temperature storage performance of the electrochemical device.

Surface tension

In some embodiments, a surface tension of the auxiliary agent is not greater than 30 mN/m. In some embodiments, a surface tension of the auxiliary agent is not greater than 25 mN/m. In some embodiments, a surface tension of the auxiliary agent is not greater than 20 mN/m. In some embodiments, a surface tension of the auxiliary agent is not greater than 15 mN/m. In some embodiments, the surface tension of the auxiliary agent is not greater than 10 mN/m. The surface tension of the auxiliary agent is measured under the condition of an auxiliary agent aqueous solution with a solid content of 1%. The auxiliary agent having the surface tension as described above makes the anode active material layer have a good interface, which helps to improve the cycle performance and high-temperature storage performance of the electrochemical device.
The surface tension of the auxiliary agent may be measured by the following method: a JC2000D3E contact angle measuring instrument is used to test an auxiliary agent aqueous solution with a solid content of 1%, each sample is tested at least 3 times, and at least 3 data samples are selected and averaged to obtain the surface tension of the auxiliary agent.

(6) Nonionic surfactant

According to some embodiments of the present application, the anode active material layer further includes a nonionic surfactant. In some embodiments, the nonionic surfactant includes at least one of polyoxyethylene ether, polyol ester, amide or block polyether.
In some embodiments, the nonionic surfactant includes at least one of the following: polyoxyethylene alkanolamide, octyl phenol polyoxyethylene ether, nonyl phenol polyoxyethylene ether, higher fatty alcohol polyoxyethylene ether, polyoxyethylene fatty acid ester, polyoxyethylene amine, alkanolamide, polyoxyethylene lauryl ether, C12-14 primary alcohol polyoxyethylene ether, C12-14 secondary alcohol polyoxyethylene ether, branched C13 Guerbet alcohol polyoxyethylene ether, branched C10 Guerbet alcohol polyoxyethylene, linear C10 alcohol polyoxyethylene ether, linear C8 octanol polyoxyethylene ether, linear C8 isooctanol polyoxyethylene ether, fatty acid monoglyceride, glycerin monostearate, fatty acid sorbitan ester, composite silicone polyether compound, polysorbate, polyoxyethylene fatty acid ester, polyoxyethylene fatty alcohol ether, polyoxyethylene-polyoxypropylene block copolymer, polyether modified trisiloxane or polyether modified organosilicon polyether siloxane.
In some embodiments, based on a total weight of the anode active material layer, a content of the nonionic surfactant is not greater than 2,500 ppm. In some embodiments, based on a total weight of the anode active material layer, a content of the nonionic surfactant is not greater than 2,000 ppm. In some embodiments, based on a total weight of the anode active material layer, a content of the nonionic surfactant is not greater than 1,500 ppm. In some embodiments, based on a total weight of the anode active material layer, a content of the nonionic surfactant is not greater than 1,000 ppm. In some embodiments, based on a total weight of the anode active material layer, a content of the nonionic surfactant is not greater than 500 ppm. In some embodiments, based on a total weight of the anode active material layer, a content of the nonionic surfactant is not greater than 200 ppm. The nonionic surfactant having the above content helps to improve the following characteristics of the electrochemical device: output power characteristics, load characteristics, low-temperature characteristics, cycle characteristics, high-temperature storage characteristics and the

like.

(6) Other components

Silicon and/or tin-containing materials

According to some embodiments of the present application, the anode active material layer further includes at least one of a silicon-containing material, a tin-containing material and an alloy material. According to some embodiments of the present application, the anode active material layer further includes at least one of a silicon-containing material and a tin-containing material. In some embodiments, the anode active material layer further includes one or more of a silicon-containing material, a siliconcarbon composite material, a silicon-oxygen material, an alloy material and a lithium-containing metal composite oxide material. In some embodiments, the anode active material layer further includes other types of anode active materials, for example, one or more materials including metal elements and metalloid elements capable of forming an alloy with lithium. In some embodiments, examples of the metal elements and metalloid elements include, but are not limited to, Mg, B, Al, Ga, In, Si, Ge, Sn, Pb, Bi, Cd, Ag, Zn, Hf, Zr, Y, Pd and Pt. In some embodiments, examples of the metal elements and metalloid elements include Si, Sn or a combination thereof. Si and Sn have an excellent ability to deintercalate lithium ions, which can provide high energy density for lithium-ion batteries. In some embodiments, other types of anode active materials may further include one or more of metal oxides and a high-molecular compound. In some embodiments, the metal oxides include, but are not limited to, iron oxide, ruthenium oxide and molybdenum oxide. In some embodiments, the high-molecular compound includes, but is not limited to, polyacetylene, polyaniline and polypyrrole.

Anode conductive material

In some embodiments, the anode active material layer further includes an anode conductive material, and the conductive material may include any conductive material as long as it does not cause chemical changes. Nonlimiting examples of the conductive material include carbon-based materials (for example, natural graphite, artificial graphite, carbon black, acetylene black, Ketjen black, carbon fibers and the like), conductive polymers (for example, polyphenylene derivatives) and mixtures thereof.

Anode binder

In some embodiments, the anode active material layer further includes an anode binder. The anode binder can enhance the binding of the anode active material particles to each other and the binding of the anode active material and the current collector. The type of the anode binder is not particularly limited, as long as it is a material that is stable with the electrolyte or the solvent used in the manufacture of the electrode.

Examples of the anode binder include, but are not limited to, resin polymers such as polyethylene, polypropylene, polyethylene terephthalate, polymethyl methacrylate, aromatic polyamide, polyimide, cellulose, nitrocellulose and the like; rubber-like polymers such as styrene-butadiene rubber (SBR), isoprene rubber, butadiene rubber, fluororubber, acrylonitrile-butadiene rubber (NBR), ethylene-propylene rubber and the like; styrene-butadiene-styrene block copolymer or a hydride thereof; thermoplastic elastomer-like polymers such as ethylene-propylene-diene terpolymer (EPDM), styrene-ethylene-butadiene-styrene copolymer, styrene-isoprene-styrene block copolymer or hydrides thereof and the like; soft resin-like polymers such as syndiotactic-1,2-polybutadiene, polyvinyl acetate, ethylene-vinyl acetate copolymer, propylene-$\alpha$-olefin copolymer and the like; fluorine polymers such as polyvinylidene fluoride, polytetrafluoroethylene, fluorinated polyvinylidene fluoride, polytetrafluoroethylene-ethylene copolymer and the like; and polymer compositions having ion conductivity of alkali metal ions (for example, lithium ions), and the like. The above anode binders may be used alone or in any combination.

In some embodiments, based on a total weight of the anode active material layer, a content of the anode binder is greater than 0.1 wt%, greater than 0.5 wt% or greater than 0.6 wt%. In some embodiments, based on a total weight of the anode active material layer, a content of the anode binder is less than 20 wt%, less than 15 wt%, less than 10 wt% or less than 8 wt%. In some embodiments, a content of the anode binder is within a range formed by any two of the above values. When the content of the anode binder is within the above range, the capacity of the electrochemical device and the strength of the anode can be sufficiently ensured.

In the case where the anode active material layer contains a rubber-like polymer (for example, SBR), in some embodiments, based on a total weight of the anode active material layer, a content of the anode binder is greater than 0.1 wt%, greater than 0.5 wt% or greater than 0.6 wt%. In some embodiments, based on a total weight of the anode active material layer, a content of the anode binder is less than 5 wt%, less than 3 wt% or less than 2 wt%. In some embodiments, based on a total weight of the anode active material layer, a content of the anode binder is within a range

formed by any two of the above values.

In the case where the anode active material layer contains a fluorine polymer (for example, polyvinylidene fluoride), in some embodiments, based on a total weight of the anode active material layer, a content of the anode binder is greater than 1 wt%, greater than 2 wt% or greater than 3 wt%. In some embodiments, based on a total weight of the anode active material layer, a content of the anode binder is less than 15 wt%, less than 10 wt% or less than 8 wt%. Based on a total weight of the anode active material layer, a content of the anode binder is within a range formed by any two of the above values.

Solvent

The type of the solvent for forming the anode slurry is not particularly limited as long as it is a solvent that can dissolve or disperse the anode active material, the anode binder, and the thickener and conductive material used as necessary. In some embodiments, the solvent for forming the anode slurry may be any one of aqueous solvents and organic solvents. Examples of the aqueous solvents may include, but are not limited to, water, alcohol and the like. Examples of the organic solvents may include, but are not limited to, N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, hexamethylphosphoramide, dimethyl sulfoxide, benzene, xylene, quinoline, pyridine, methylnaphthalene, hexane and the like. The above solvents may be used alone or in any combination.

Thickener

A thickener is typically used to adjust the viscosity of an anode slurry. The type of the thickener is not particularly limited, and examples thereof may include, but are not limited to, carboxymethyl cellulose, methyl cellulose, hydroxymethyl cellulose, ethyl cellulose, polyvinyl alcohol, oxidized starch, phosphated starch, casein and salts thereof, and the like. The above thickeners may be used alone or in any combination.

In some embodiments, based on a total weight of the anode active material layer, a content of the thickener is greater than 0.1 wt%, greater than 0.5 wt% or greater than 0.6 wt%. In some embodiments, based on a total weight of the anode active material layer, a content of the thickener is less than 5 wt%, less than 3 wt% or less than 2 wt%. When the content of the thickener is within the above range, a decrease in the capacity of the electrochemical device and an increase in the resistance can be suppressed, and at the same time, good coatability of the anode slurry can be ensured.

Surface coating

In some embodiments, the surface of the anode active material layer may have a material different from its composition attached. Examples of the surface-attached material of the anode active material layer include, but are not limited to, aluminum oxide, silicon dioxide, titanium dioxide, zirconium oxide, magnesium oxide, calcium oxide, boron oxide, antimony oxide, bismuth oxide and other oxides, lithium sulfate, sodium sulfate, potassium sulfate, magnesium sulfate, calcium sulfate, aluminum sulfate and other sulfates, lithium carbonate, calcium carbonate, magnesium carbonate and other carbonates, and the like.

(7) Content of anode active material

In some embodiments, based on a total weight of the anode active material layer, a content of the anode active material is greater than 80 wt%, greater than 82 wt% or greater than 84 wt%. In some embodiments, based on a total weight of the anode active material layer, a content of the anode active material is less than 99 wt% or less than 98 wt%. In some embodiments, based on a total weight of the anode active material layer, a content of the anode active material is within a range formed by any two of the above values.

(8) Thickness of anode active material layer

The thickness of the anode active material layer refers to the thickness of the anode active material layer on any side of an anode current collector. In some embodiments, a thickness of the anode active material layer is greater than 15 μm, greater than 20 μm or greater than 30 μm. In some embodiments, a thickness of the anode active material layer is less than 300 μm, less than 280 μm or less than 250 μm. In some embodiments, a thickness of the anode active material layer is within a range formed by any two of the above values.

(9) Density of anode active material

In some embodiments, a density of the anode active material in the anode active material layer is greater than 1 g/cm$^3$, greater than 1.2 g/cm$^3$ or greater than 1.3 g/cm$^3$. In some embodiments, a density of the anode active material in the anode active material layer is less than 2.2 g/cm$^3$, less than 2.1 g/cm$^3$, less than 2.0 g/cm$^3$ or less than 1.9 g/cm$^3$. In some embodiments, a density of the anode active material in the anode active material layer is within a range formed by any two of the above values.

When the density of the anode active material is within the above range, damage to the anode active material particles can be prevented, the deterioration of the high-current-density charge and discharge characteristics caused by an increase in the initial irreversible capacity of the electrochemical device or a decrease in the permeability of the electrolyte near the anode current collector/anode active material interface can be suppressed, and a decrease in the capacity of the electrochemical device and an increase in the resistance can be suppressed.

2. Anode current collector

As a current collector maintaining the anode active material, a well-known current collector may be used arbitrarily. Examples of the anode current collector include, but are not limited to, aluminum, copper, nickel, stainless steel, nickel-plated steel and other metal materials. In some embodiments, the anode current collector is copper.

In the case where the anode current collector is a metal material, the form of the anode current collector may include, but is not limited to, metal foil, a metal cylinder, a metal tape coil, a metal plate, a metal film, expanded metal, stamped metal, foam metal and the like. In some embodiments, the anode current collector is a metal film. In some embodiments, the anode current collector is copper foil. In some embodiments, the anode current collector is rolled copper foil based on a rolling method or electrolytic copper foil based on an electrolytic method.

In some embodiments, a thickness of the anode current collector is greater than 1 $\mu$m or greater than 5 $\mu$m. In some embodiments, a thickness of the anode current collector is less than 100 $\mu$m or less than 50 $\mu$m. In some embodiments, a thickness of the anode current collector is within a range formed by any two of the above values.

The thickness ratio of the anode current collector to the anode active material layer refers to a ratio of the thickness of the single-sided anode active material layer to the thickness of the anode current collector before the injection of the electrolyte, and the value is not particularly limited. In some embodiments, a thickness ratio of the anode current collector to the anode active material layer is less than 150, less than 20 or less than 10. In some embodiments, a thickness ratio of the anode current collector to the anode active material layer is greater than 0.1, greater than 0.4 or greater than 1. In some embodiments, a thickness ratio of the anode current collector to the anode active material layer is within a range formed by any two of the above values. When the thickness ratio of the anode current collector to the anode active material layer is within the above range, the capacity of the electrochemical device can be ensured, and at the same time, the heat release of the anode current collector during high-current-density charge and discharge can be suppressed.

II. Electrolyte

The electrolyte used in the electrochemical device of the present application includes an electrolyte and a solvent that dissolves the electrolyte. In some embodiments, the electrolyte used in the electrochemical device of the present application further includes an additive.

One of the main features of the electrochemical device of the present application is that the electrolyte includes at least one of the following compounds:

a) propionate;

b) a compound having a cyano group(s);

c) lithium difluorophosphate; or

d) a compound of Formula 1:

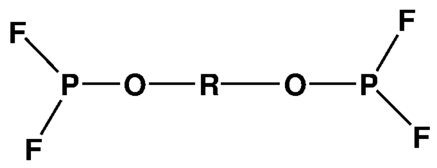 Formula 1,

wherein:

R is a substituted or unsubstituted $C_1$-$C_{10}$ hydrocarbyl, and when substituted, the substituent is halogen;

a) Propionate

According to some embodiments of the present application, the propionate has Formula 2:

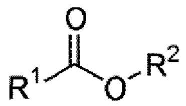 Formula 2,

wherein:

$R^1$ is selected from ethyl or haloethyl, and

$R^2$ is selected from $C_1$-$C_6$ alkyl or $C_1$-$C_6$ haloalkyl.

In some embodiments, the propionate includes, but is not limited to, methyl propionate, ethyl propionate, propyl propionate, butyl propionate, amyl propionate, methyl halopropionate, ethyl halopropionate, propyl halopropionate, butyl halopropionate and amyl halopropionate. In some embodiments, the propionate is selected from at least one of methyl propionate, ethyl propionate, propyl propionate, butyl propionate and amyl propionate. In some embodiments, the halo group in the methyl halopropionate, ethyl halopropionate, propyl halopropionate, butyl halopropionate and amyl halopropionate is selected from one or more of a fluoro group (-F), a chloro group (-Cl), a bromo group (-Br) and an iodo group (-I). In some embodiments, the halo group is a fluoro group (-F), which can achieve a more excellent effect.

In some embodiments, based on a total weight of the electrolyte, a content of the propionate is 10% to 65%. In some embodiments, based on a total weight of the electrolyte, a content of the propionate is 15% to 60%. In some embodiments, based on a total weight of the electrolyte, a content of the propionate is 30% to 50%. In some embodiments, based on a total weight of the electrolyte, a content of the propionate is 30% to 40%. A more excellent effect can be achieved by using propionate having the above content.

b) Compound having a cyano group(s)

The compound having a cyano group(s) is not particularly limited as long as it is an organic compound having at least one cyano group in the molecule.

According to some embodiments of the present application, the compound having a cyano group(s) includes at least one structure of Formula 3, Formula 4, Formula 5 or Formula 6:

$A^1$-CN Formula 3,

NC-$A^2$-CN Formula 4,

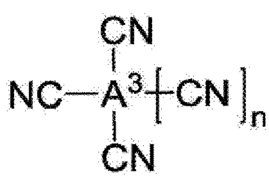 Formula 5,

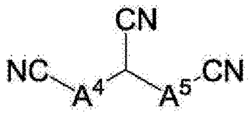

Formula 6,

Compound of Formula 3

According to some embodiments of the present application, the compound having a cyano group(s) has Formula 3:

$A^1$-CN Formula 3,

The molecular weight of the compound of Formula 3 is not particularly limited. In some embodiments, a molecular weight of the compound of Formula 3 is greater than 55, greater than 65 or greater than 80. In some embodiments, a molecular weight of the compound of Formula 3 is less than 310, less than 185 or less than 155. The compound of Formula 3 having the above molecular weight has an appropriate solubility in the electrolyte.

In some embodiments, $A^1$ in Formula 3 is selected from the group consisting of $C_{2-20}$ alkyl, $C_{2-20}$ haloalkyl, $C_{2-20}$ alkenyl, $C_{2-20}$ haloalkenyl, $C_{2-20}$ alkynyl, $C_{2-20}$ haloalkynyl, $C_{6-30}$ aryl and $C_{6-30}$ haloaryl. In some embodiments, $A^1$ is selected from $C_{2-15}$ linear or branched alkyl or $C_{2-4}$ alkenyl. In some embodiments, $A^1$ is $C_{2-12}$ linear or branched alkyl. In some embodiments, $A^1$ is $C_{4-11}$ linear or branched alkyl. In some embodiments, $A^1$ is selected from alkyl such as ethyl, n-propyl, isopropyl, isopropyl, n-butyl, sec-butyl, isobutyl, t-butyl, n-pentyl, t-pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl or the like; alkenyl such as ethenyl, 1-propenyl, isopropenyl, 1-butenyl, 1-pentenyl or the like; and alkynyl such as ethynyl, 1-propynyl, 1-butynyl, 1-pentynyl or the like, aryl such as phenyl, tolyl, ethylphenyl, n-propylphenyl, isopropylphenyl, n-butylphenyl, sec-butylphenyl, isobutylphenyl, t-butylphenyl, trifluoromethylphenyl, xylyl, benzyl, phenethyl, methoxyphenyl, ethoxyphenyl or trifluoromethoxyphenyl, and the like.

Examples of the compound of Formula 3 may include, but are not limited to, propionitrile, butyronitrile, valeronitrile, hexanenitrile, heptonitrile, octanenitrile, nonanenitrile, decanonitrile, undecanenitrile, dodecanonitrile, cyclopentanecarbonitrile, cyclohexanecarbonitrile, acrylonitrile, methacrylonitrile, butenenitrile, 3-methylbutenenitrile, 2-methyl-2-butenenitrile, 2-pentenenitrile, 2-methyl-2-pentenenitrile, 3-methyl-2-pentenenitrile, 2-hexenenitrile and the like. In some embodiments, the compound of Formula 3 is selected from valeronitrile, octanenitrile, decanonitrile, dodecanonitrile and butenenitrile, more preferably valeronitrile, decanonitrile, dodecanonitrile or butenenitrile. In some embodiments, the compound of Formula 3 is selected from valeronitrile, decanonitrile or butenenitrile.

Compound of Formula 4

According to some embodiments of the present application, the compound having a cyano group(s) has Formula 4:

NC-$A^2$-CN Formula 4,

The molecular weight of the compound of Formula 4 is not particularly limited. The smaller the molecular weight of the compound of Formula 4, the greater the proportion of a cyano group(s) in the molecule and the greater the viscosity of the molecule. The larger the molecular weight, the higher the boiling point of the compound. In some embodiments, a molecular weight of the compound of Formula 4 is greater than 65, greater than 80 or greater than 90. In some embodiments, a molecular weight of the compound of Formula 4 is less than 270, less than 160 or less than 135. The compound of Formula 4 having the above molecular weight has an appropriate viscosity, boiling point and solubility in the electrolyte.

In some embodiments, $A^2$ in Formula 4 is an organic group having 1-30 carbon atoms, wherein the organic group is composed of at least one of the following atoms: a hydrogen atom, a carbon atom, a nitrogen atom, an oxygen atom, a sulfur atom, a phosphorus atom and a halogen atom. In some embodiments, the organic group includes a carbon atom and a hydrogen atom, and at least one of the following hetero atoms: a nitrogen atom, an oxygen atom, a sulfur atom, a phosphorus atom or a halogen atom, wherein: the carbon atom and the hydrogen atom constitute a skeleton structure of the organic group, and a part of the carbon atoms in the skeleton structure are substituted with the hetero atoms; and/or the organic group includes a substituent composed of the carbon atom, the hydrogen atom and/or the hetero atom.

In some embodiments, $A^2$ is selected from the group consisting of $C_{2-20}$ alkylene, $C_{2-20}$ haloalkylene, $C_{2-20}$

alkenylene, $C_{2-20}$ haloalkenylene, $C_{2-20}$ alkynylene, $C_{2-20}$ haloalkynylene, $C_{6-30}$ arylene, $C_{6-30}$ haloarylene, carbonyl, sulfonyl, sulfinyl, ether, thioether, dialkyl borate or boryl. In some embodiments, $A^2$ is selected from $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene or $C_{6-30}$ haloarylene. In some embodiments, $A_2$ is $C_{2-5}$ alkylene or $C_{2-5}$ haloalkylene.

Examples of the compound of Formula 4 may include, but are not limited to, malononitrile, succinonitrile, glutaronitrile, adiponitrile, pimelonitrile, suberonitrile, azelanitrile, sebaconitrile, undecane dinitrile, dodecane dinitrile, methyl malononitrile, ethyl malononitrile, isopropyl malononitrile, tert-butyl malononitrile, methyl succinonitrile, 2,2-dimethyl succinonitrile, 2,3-dimethyl succinonitrile, 2,3,3-trimethyl succinonitrile, 2,2,3,3-tetramethyl succinonitrile, 2,3-diethyl-2,3-dimethyl succinonitrile, 2,2-diethyl-3,3-dimethyl succinonitrile, bicyclohexyl-1,1-dicarbonitrile, bicyclohexyl-2,2-dicarbonitrile, bicyclohexyl-3,3-dicarbonitrile, 2,5-dimethyl-2,5-hexane dicarbonitrile, 2,3-diisobutyl-2,3-dimethyl succinonitrile, 2,2-diisobutyl-3,3-dimethyl succinonitrile, 2-methylglutaronitrile, 2,3-dimethyl glutaronitrile, 2,4-dimethyl glutaronitrile, 2,2,3,3-tetramethyl glutaronitrile, 2,2,4,4-tetramethyl glutaronitrile, 2,2,3,4-tetramethyl glutaronitrile, 2,3,3,4-tetramethyl glutaronitrile, maleonitrile, fumaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy) dipropionitrile, 3,3'-(ethylenedithio) dipropionitrile, 3,9-bis(2-cyanoethyl)-2,4,8,10-tetraoxaspiro[5,5]undecane or the like.

In some embodiments, the compound of Formula 4 is selected from malononitrile, succinonitrile, glutaronitrile, adiponitrile, pimelonitrile, suberonitrile, azelanitrile, sebaconitrile, undecane dinitrile, dodecane dinitrile and 3,9-bis(2-cyanoethyl)-2,4,8,10-tetraoxaspiro[5,5]undecane or fumaronitrile. In some embodiments, the compound of Formula 4 is selected from succinonitrile, glutaronitrile, adiponitrile, pimelonitrile, suberonitrile, glutaronitrile or 3,9-bis(2-cyanoethyl)-2,4,8,10-tetraoxaspiro[5,5]undecane. In some embodiments, the compound of Formula 4 is selected from succinonitrile, glutaronitrile, adiponitrile or pimelonitrile.

<u>Compound of Formula 5</u>

According to some embodiments of the present application, the compound having a cyano group(s) has Formula 5:

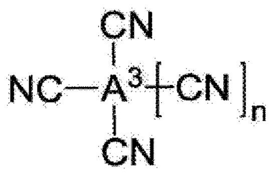

Formula 5,

In some embodiments, $A^3$ in Formula 5 is an organic group having 1-30 carbon atoms, wherein the organic group is composed of at least one of the following atoms: a hydrogen atom, a carbon atom, a nitrogen atom, an oxygen atom, a sulfur atom, a phosphorus atom and a halogen atom. In some embodiments, the organic group includes a carbon atom and a hydrogen atom, and at least one of the following hetero atoms: a nitrogen atom, an oxygen atom, a sulfur atom, a phosphorus atom or a halogen atom, wherein: the carbon atom and the hydrogen atom constitute a skeleton structure of the organic group, and a part of the carbon atoms in the skeleton structure are substituted with the hetero atoms; and/or the organic group includes a substituent composed of the carbon atom, the hydrogen atom and/or the hetero atom.

In some embodiments, $A^3$ is selected from the group consisting of $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene, $C_{6-30}$ haloarylene and $C_{2-20}$ alkoxy.

In some embodiments, $A^3$ is selected from the group consisting of $C_{2-12}$ alkylene, $C_{2-12}$ haloalkylene, $C_{2-12}$ alkenylene, $C_{2-12}$ haloalkenylene, $C_{2-12}$ alkynylene, $C_{2-12}$ haloalkynylene or $C_{2-12}$ alkoxy.

In some embodiments, n is an integer from 0 to 5. In some embodiments, n is 0, 1, 2, 3, 4 or 5.

Examples of the compound of Formula 5 may include, but are not limited to the following compounds:

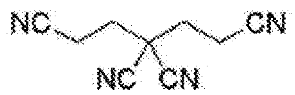

,

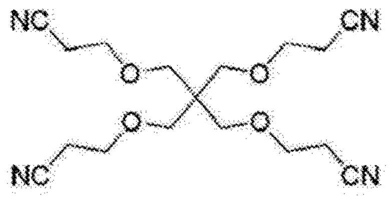

.

Compound of Formula 6

According to some embodiments of the present application, the compound having a cyano group(s) has Formula 6:

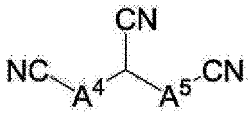

Formula 6,

The molecular weight of the compound of Formula 6 is not particularly limited. In some embodiments, the molecular weight of the compound of Formula 6 is greater than 90, greater than 120 or greater than 150. In some embodiments, a molecular weight of the compound of Formula 6 is less than 450, less than 300 or less than 250. The compound of Formula 6 having the above molecular weight has an appropriate solubility in the electrolyte.

In some embodiments, $A^4$ and $A^5$ in Formula 6 are each independently selected from the group consisting of $C_{1-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene and $C_{6-30}$ haloarylene. In some embodiments, $A_4$ and $A_5$ are each independently selected from $C_{2-5}$ alkylene, $C_{2-5}$ haloalkylene, $C_{2-5}$ alkenylene, $C_{2-5}$ haloalkenylene, $C_{2-5}$ alkynylene or $C_{2-5}$ haloalkynylene. In some embodiments, $A_4$ and $A_5$ are each independently selected from methylene, ethylene, 1,3-propylene, tetraethylene, pentamethylene, 1,2-vinylidene, 1-propenylidene, 2-propenylidene, 1-butenylidene, 2-butenylidene, 1-pentenylidene, 2-pentenylidene, ethynylene, propynylene, 1-butynylene, 2-butynylene, 1-pentynylene or 2-pentynylene. In some embodiments, $A_4$ and $A_5$ are each independently selected from methylene, ethylene, 1,3-propylene, tetraethylene or pentamethylene, more preferably methylene, ethylene or 1,3-propylene.

In some embodiments, the compound of Formula 6 is selected from:

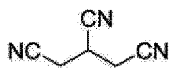
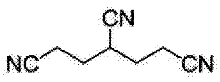
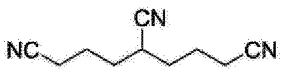
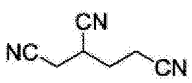
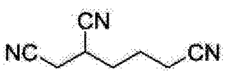
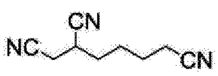
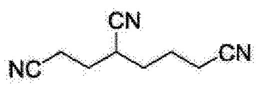
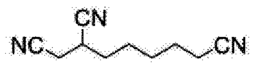

.

In some embodiments, the compound having a cyano group(s) includes, but is not limited to, one or more of the following: succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,4-dicyanopentane, 1,2-dicyanobenzene, 1,3-dicyanobenzene, 1,4-dicyanobenzene, ethylene glycol bis(propionitrile)ether, 3,5-dioxa-heptanedinitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane and 1,2,5-tris(cyanoethoxy)pentane.

The above compounds having a cyano group(s) may be used alone or in any combination. When the electrolyte contains two or more compounds having a cyano group(s), the content of the compound having a cyano group(s) refers to the total content of the two or more compounds having a cyano group(s). In some embodiments, based on a total weight of the electrolyte, a content of the compound having a cyano group(s) is greater than 0.001 wt%. In some embodiments, based on a total weight of the electrolyte, a content of the compound having a cyano group(s) is greater than 0.01 wt%. In some embodiments, based on a total weight of the electrolyte, a content of the compound having a cyano group(s) is greater than 0.1 wt%. In some embodiments, based on a total weight of the electrolyte, a content of the compound having a cyano group(s) is less than 10 wt%. In some embodiments, based on a total weight of the electrolyte, a content of the compound having a cyano group(s) is less than 8 wt%. In some embodiments, based on a total weight of the electrolyte, a content of the compound having a cyano group(s) is less than 5 wt%. In some embodiments, based on a total weight of the electrolyte, a content of the compound having a cyano group(s) is less than 2 wt%. In some embodiments, based on a total weight of the electrolyte, a content of the compound having a cyano group(s) is less than 1 wt%. In some embodiments, based on a total weight of the electrolyte, a content of the compound having a cyano group(s) is less than 0.5 wt%. In some embodiments, based on a total weight of the electrolyte, a content of the compound having a cyano group(s) is within a range formed by any two of the above values. When the content of the compound having a cyano group(s) is within in the above range, it helps to improve the following characteristics of the electrochemical device: output power characteristics, load characteristics, low-temperature characteristics, cycle characteristics, high-temperature storage characteristics and the like.

c) Lithium difluorophosphate ($LiPO_2F_2$)

In some embodiments, based on a total weight of the electrolyte, a content of the lithium difluorophosphate is 0.01 wt% to 15 wt%. In some embodiments, based on a total weight of the electrolyte, a content of the lithium difluorophosphate is 0.05 wt% to 12 wt%. In some embodiments, based on a total weight of the electrolyte, a content of the lithium difluorophosphate is 0.1 wt% to 10 wt%. In some embodiments, based on a total weight of the electrolyte, a content of the lithium difluorophosphate is 0.5 wt% to 8 wt%. In some embodiments, based on a total weight of the electrolyte, a content of the lithium difluorophosphate is 1 wt% to 5 wt%. In some embodiments, based on a total weight of the electrolyte, a content of the lithium difluorophosphate is 2 wt% to 4 wt%.

d) Compound of Formula 1

Examples of the compound of Formula 1 may include, but are not limited to:

Formula 1-1: 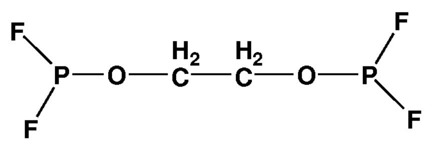 (1,2-bis(difluorophosphoryloxy)ethane);

Formula 1-2: 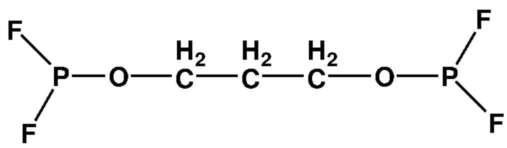 (1,2-bis(difluorophosphoryloxy)propane);

Formula 1-3: 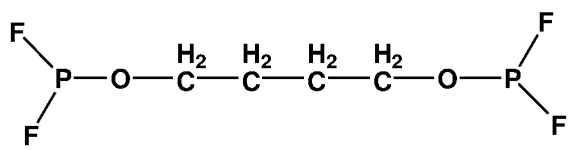 (1,2-bis(difluorophosphoryloxy)butane).

In some embodiments, based on a total weight of the electrolyte, a content of the compound of Formula 1 is

0.01 wt% to 15 wt%. In some embodiments, based on a total weight of the electrolyte, a content of the compound of Formula 1 is 0.05 wt% to 12 wt%. In some embodiments, based on a total weight of the electrolyte, a content of the compound of Formula 1 is 0.1 wt% to 10 wt%. In some embodiments, based on a total weight of the electrolyte, a content of the compound of Formula 1 is 0.5 wt% to 8 wt%. In some embodiments, based on a total weight of the electrolyte, a content of the compound of Formula 1 is 1 wt% to 5 wt%. In some embodiments, based on a total weight of the electrolyte, a content of the compound of Formula 1 is 2 wt% to 4 wt%.

Solvent

In some embodiments, the electrolyte further includes any non-aqueous solvent known in the prior art as a solvent of the electrolyte.

In some embodiments, the non-aqueous solvent includes, but is not limited to, one or more of the following: a cyclic carbonate, a chain carbonate, a cyclic carboxylate, a chain carboxylate, a cyclic ether, a chain ether, a phosphorus-containing organic solvent, a sulfur-containing organic solvent and an aromatic fluorine-containing solvent.

In some embodiments, examples of the cyclic carbonate may include, but are not limited to, one or more of the following: ethylene carbonate (EC), propylene carbonate (PC) and butylene carbonate. In some embodiments, the cyclic carbonate has 3-6 carbon atoms.

In some embodiments, examples of the chain carbonate may include, but are not limited to, one or more of the following: dimethyl carbonate, ethyl methyl carbonate, diethyl carbonate (DEC), methyl n-propyl carbonate, ethyl n-propyl carbonate, di-n-propyl carbonate and other chain carbonates. Examples of the fluorine-substituted chain carbonate may include, but are not limited to, one or more of the following: bis(fluoromethyl)carbonate, bis(difluoromethyl)carbonate, bis(trifluoromethyl)carbonate, bis(2-fluoroethyl)carbonate, bis(2,2-difluoroethyl)carbonate, bis(2,2,2-trifluoroethyl)carbonate, 2-fluoroethyl methyl carbonate, 2,2-difluoroethyl methyl carbonate, 2,2,2-trifluoroethyl methyl carbonate and the like.

In some embodiments, examples of the cyclic carboxylate may include, but are not limited to, one or more of the following: one or more of γ-butyrolactone and γ-valerolactone. In some embodiments, a part of the hydrogen atoms of the cyclic carboxylate may be substituted with fluorine.

In some embodiments, examples of the chain carboxylate may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, ethyl pivalate and the like. In some embodiments, a part of the hydrogen atoms of the chain carboxylate may be substituted with fluorine. In some embodiments, examples of the fluorine-substituted chain carboxylate may include, but are not limited to, methyl trifluoroacetate, ethyl trifluoroacetate, propyl trifluoroacetate, butyl trifluoroacetate, 2,2,2-trifluoroethyl trifluoroacetate and the like.

In some embodiments, examples of the cyclic ether may include, but are not limited to, one or more of the following: tetrahydrofuran, 2-methyltetrahydrofuran, 1,3-dioxolane, 2-methyl-1,3-dioxolane, 4-methyl-1,3-dioxolane, 1,3-dioxane, 1,4-dioxane and dimethoxypropane.

In some embodiments, examples of the chain ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, 1,2-ethoxymethoxyethane and the like.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate and the like.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate and dibutyl sulfate. In some embodiments, a part of the hydrogen atoms of the sulfur-containing organic solvent may be substituted with fluorine.

In some embodiments, the aromatic fluorine-containing solvent includes, but is not limited to, one or more of the following: fluorobenzene, difluorobenzene, trifluorobenzene, tetrafluorobenzene, pentafluorobenzene, hexafluorobenzene and trifluoromethylbenzene.

In some embodiments, the solvent used in the electrolyte of the present application includes a cyclic carbonate, a chain carbonate, a cyclic carboxylate, a chain carboxylate and combinations thereof. In some embodiments, the solvent used in the electrolyte of the present application includes at least one of ethylene carbonate, propylene carbonate, diethyl carbonate, ethyl propionate, propyl propionate, n-propyl acetate or ethyl acetate. In some embodiments, the solvent used in the electrolyte of the present application includes: ethylene carbonate, propylene carbonate, diethyl carbonate,

ethyl propionate, propyl propionate, γ-butyrolactone and combinations thereof.

After the chain carboxylate and/or the cyclic carboxylate are added to the electrolyte, the chain carboxylate and/or the cyclic carboxylate may form a passivation film on the surface of the electrode, thereby enhancing the capacity retention rate after the interval charging cycle of the electrochemical device. In some embodiments, the electrolyte contains 1 wt% to 60 wt% of the chain carboxylate, the cyclic carboxylate and a combination thereof. In some embodiments, the electrolyte contains ethyl propionate, propyl propionate, γ-butyrolactone and a combination thereof. Based on a total weight of the electrolyte, a content of the combination is 1 wt% to 60 wt%, 10 wt % to 60 wt%, 10 wt% to 50 wt% or 20wt% to 50wt%. In some embodiments, based on a total weight of the electrolyte, the electrolyte contains 1 wt% to 60 wt%, 10 wt% to 60 wt%, 20 wt% to 50 wt%, 20 wt% to 40 wt%, or 30 wt% of propyl propionate.

## Additive

In some embodiments, examples of the additive may include, but are not limited to, one or more of the following: fluorocarbonate, carbon-carbon double bond-containing ethylene carbonate, sulfur-oxygen double bond-containing compound and acid anhydride.

In some embodiments, based on a total weight of the electrolyte, a content of the additive is 0.01% to 15%, 0.1% to 10% or 1% to 5%.

According to embodiments of the present application, based on a total weight of the electrolyte, a content of the propionate is 1.5 to 30 times, 1.5 to 20 times, 2 to 20 times or 5 to 20 times the additive.

In some embodiments, the additive includes one or more fluorocarbonates. When the lithium-ion battery is charged/discharged, the fluorocarbonate may act together with the propionate to form a stable protective film on the surface of the anode, thereby suppressing the decomposition reaction of the electrolyte.

In some embodiments, the fluorocarbonate has the formula $C{=}O(OR_1)(OR_2)$, wherein $R_1$ and $R_2$ are each selected from alkyl or haloalkyl having 1-6 carbon atoms, wherein at least one of $R_1$ and $R_2$ is selected from fluoroalkyl having 1-6 carbon atoms, and $R_1$ and $R_2$ optionally form a 5- to 7-membered ring along with the atoms to which they are attached.

In some embodiments, examples of the fluorocarbonate may include, but are not limited to, one or more of the following: fluoroethylene carbonate, cis-4,4-difluoroethylene carbonate, trans-4,4-difluoroethylene carbonate, 4,5-difluoroethylene carbonate, 4-fluoro-4-methylethylene carbonate, 4-fluoro-5-methylethylene carbonate, methyl trifluoromethyl carbonate, methyl trifluoroethyl carbonate, ethyl trifluoroethyl carbonate and the like.

In some embodiments, the additive includes one or more carbon-carbon double bond-containing ethylene carbonates. Examples of the carbon-carbon double bond-containing ethylene carbonate may include, but are not limited to, one or more of the following: vinylene carbonate, methyl vinylene carbonate, ethyl vinylene carbonate, 1,2-dimethylvinylene carbonate, 1,2-diethylvinylene carbonate, fluorovinylene carbonate, trifluoromethyl vinylene carbonate; vinyl ethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, 1,1-diethyl-2-methylene ethylene carbonate and the like. In some embodiments, the carbon-carbon double bond-containing ethylene carbonate includes vinylene carbonate, which is easy to obtain and can achieve more excellent effects.

In some embodiments, the additive includes one or more sulfur-oxygen double bond-containing compounds. Examples of the sulfur-oxygen double bond-containing compound may include, but are not limited to, one or more of the following: a cyclic sulfate, a chain sulfate, a chain sulfonate, a cyclic sulfonate, a chain sulfite, a cyclic sulfite and the like.

Examples of the cyclic sulfate may include, but are not limited to, one or more of the following: 1,2-ethanediol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate and the like.

Examples of the chain sulfate may include, but are not limited to, one or more of the following: dimethyl sulfate, ethyl methyl sulfate, diethyl sulfate and the like.

Examples of the chain sulfonate may include, but are not limited to, one or more of the following: a fluorosulfonate such as methyl fluorosulfonate and ethyl fluorosulfonate, methyl methanesulfonate, ethyl methanesulfonate, butyl dimethanesulfonate, methyl 2-(methylsulfonyloxy)propionate, ethyl 2-(methylsulfonyloxy)propionate and the like.

Examples of the cyclic sulfonate may include, but are not limited to, one or more of the following: 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1,4-butane sultone, 1,5-pentane sultone, methylene methanedisulfonate, ethylene methanedisulfonate and the like.

Examples of the chain sulfite may include, but are not limited to, one or more of the following: dimethyl sulfite, ethyl methyl sulfite, diethyl sulfite and the like.

Examples of the cyclic sulfite may include, but are not limited to, one or more of the following: 1,2-ethanediol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite and the like.

In some embodiments, the additive includes one or more acid anhydrides. Examples of the acid anhydride may include, but are not limited to, one or more of a cyclic phosphoric anhydride, a carboxylic anhydride, a disulfonic anhydride and a carboxylic sulfonic anhydride. Examples of the cyclic phosphoric anhydride may include, but are not limited to, one or more of trimethylphosphoric cyclic anhydride, triethylphosphoric cyclic anhydride and tripropylphosphoric cyclic anhydride. Examples of the carboxylic anhydride may include, but are not limited to, one or more of succinic anhydride, glutaric anhydride and maleic anhydride. Examples of the disulfonic anhydride may include, but are not limited to, one or more of ethane disulfonic anhydride and propane disulfonic anhydride. Examples of the carboxylic sulfonic anhydride may include, but are not limited to, one or more of sulfobenzoic anhydride, sulfopropionic anhydride and sulfobutyric anhydride.

In some embodiments, the additive is a combination of a fluorocarbonate and a carbon-carbon double bond-containing ethylene carbonate. In some embodiments, the additive is a combination of a fluorocarbonate and a sulfur-oxygen double bond-containing compound. In some embodiments, the additive is a combination of a fluorocarbonate and a compound having 2-4 cyano groups. In some embodiments, the additive is a combination of a fluorocarbonate and a cyclic carboxylate. In some embodiments, the additive is a combination of a fluorocarbonate and a cyclic phosphoric anhydride. In some embodiments, the additive is a combination of a fluorocarbonate and a carboxylic anhydride. In some embodiments, the additive is a combination of a fluorocarbonate and a sulfonic anhydride. In some embodiments, the additive is a combination of a fluorocarbonate and a carboxylic sulfonic anhydride.

Electrolyte

The electrolyte is not particularly limited, and any well-known material as an electrolyte may be used arbitrarily. In the case of a lithium secondary battery, lithium salts are typically used. Examples of the electrolyte may include, but are not limited to, inorganic lithium salts such as $LiPF_6$, $LiBF_4$, $LiClO_4$, $LiAlF_4$, $LiSbF_6$, $LiTaF_6$, $LiWF_7$ and the like; lithium tungstates such as $LiWOF_5$ and the like; lithium salts of carboxylic acid such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, $CF_3CF_2CF_2CF_2CO_2Li$ and the like; lithium salts of sulfonic acid such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3L1$ and the like; imide lithium salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, cyclic-1,2-perfluoroethane bissulfonimide lithium, cyclic-1,3-perfluoropropane bissulfonimide lithium, $LiN(CF_3SO_2)(C_4F_9SO_2)$ and the like; methylated lithium salts such as $LiC(FSO_2)_3$, $LiC(CF_3SO_2)_3$, $LiC(C_2F_5SO_2)_3$ and the like; lithium (malonate)borates such as lithium bis(malonate)borate, lithium difluoro(malonate)borate and the like; lithium (malonate)phosphates such as lithium tris(malonate)phosphate, lithium difluorobis(malonate)phosphate, lithium tetrafluoro(malonate)phosphate and the like; fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, $LiBF_2(C_2F_5SO_2)_2$ and the like; lithium oxalate borates such as lithium difluoro(oxalato)borate, lithium bis(oxalate)borate and the like; and lithium (oxalate)phosphates such as lithium tetrafluoro(oxalate)phosphate, lithium difluorobis(oxalate)phosphate, lithium tris(oxalate)phosphate or the like.

In some embodiments, the electrolyte is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, cyclic-1,2-perfluoroethane bissulfonimide lithium, cyclic-1,3-perfluoropropane bissulfonimide lithium, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluoro(oxalato)borate, lithium bis(oxalate)borate or lithium difluorobis(oxalate)phosphate, which helps to improve output power characteristics, high-rate charge and discharge characteristics, high-temperature storage characteristics, cycle characteristics and the like of the electrochemical device.

The content of the electrolyte is not particularly limited as long as the effect of the present application is not impaired. In some embodiments, a total molar concentration of lithium in the electrolyte is greater than 0.3 mol/L, greater than 0.4 mol/L or greater than 0.5 mol/L. In some embodiments, a total molar concentration of lithium in the electrolyte is less than 3 mol/L, less than 2.5 mol/L or less than 2.0 mol/L. In some embodiments, the total molar concentration of lithium in the electrolyte is within a range formed by any two of the above values. When the concentration of the electrolyte is within the above range, lithium as charged particles will not be too small in number, and the viscosity can be in an appropriate range, so it is easy to ensure good conductivity.

In the case where two or more electrolytes are used, the electrolyte includes at least one salt selected from the group consisting of monofluorophosphate, borate, oxalate and fluorosulfonate. In some embodiments, the electrolyte includes a salt selected from the group consisting of monofluorophosphate, oxalate and fluorosulfonate. In some embodiments, the electrolyte includes lithium salts. In some embodiments, based on a total weight of the electrolyte, a

content of the salt selected from the group consisting of monofluorophosphate, borate, oxalate and fluorosulfonate is greater than 0.01 wt% or greater than 0.1 wt%. In some embodiments, based on a total weight of the electrolyte, a content of the salt selected from the group consisting of monofluorophosphate, borate, oxalate and fluorosulfonate is less than 20 wt% or less than 10 wt%. In some embodiments, the content of the salt selected from the group consisting of monofluorophosphate, borate, oxalate and fluorosulfonate is within a range formed by any two of the above values.

In some embodiments, the electrolyte includes one or more than one substance selected from the group consisting of monofluorophosphate, borate, oxalate and fluorosulfonate, and one or more than one other salt. Examples of the other salt include the lithium salts exemplified above, in some embodiments, $LiPF_6$, $LiN(FSO_2)(CF_3SO_2)$, $LiN(CF_3SO_2)_2$, $LiN(C_2F_5SO_2)_2$, cyclic 1,2-perfluoroethane bissulfonimide lithium, cyclic-1,3-perfluoropropane bissulfonimide lithium, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, or $LiPF_3(C_2F_5)_3$. In some embodiments, the other salt is $LiPF_6$

In some embodiments, based on a total weight of the electrolyte, a content of the other salt is greater than 0.01 wt% or greater than 0.1 wt%. In some embodiments, based on a total weight of the electrolyte, a content of the other salt is less than 20 wt%, less than 15 wt% or less than 10 wt%. In some embodiments, the content of the other salt is within a range formed by any two of the above values. The other salt having the above content helps to balance the conductivity and viscosity of the electrolyte.

In addition to the above solvent, additive, and electrolyte salt, the electrolyte may contain an anode coating forming agent, a cathode protective agent, an anti-overcharge agent and other additional additives as necessary. As the additive, additives generally used in non-aqueous electrolyte secondary batteries may be used, and examples thereof may include, but are not limited to, vinylene carbonate, succinic anhydride, biphenyl, cyclohexylbenzene, 2,4-difluoroanisole, propane sultone, propene sultone and the like. These additives may be used alone or in any combination. In addition, the content of these additives in the electrolyte is not particularly limited, and may be appropriately set according to the type of the additives and the like. In some embodiments, based on a total weight of the electrolyte, a content of the additive is less than 5 wt%, in the range of 0.01 wt% to 5 wt% or in the range of 0.2 wt% to 5 wt%.

## III. Cathode

The cathode includes a cathode current collector and a cathode active material layer disposed on one or two surfaces of the cathode current collector.

### 1. Cathode active material layer

The cathode active material layer includes a cathode active material, and there may be one or multiple cathode active material layers. Each of the multiple cathode active material layers may include the same or different cathode active materials. The cathode active material is any material that can reversibly intercalate and deintercalate lithium ions and other metal ions.

The type of the cathode active material is not particularly limited as long as it can electrochemically occlude and release metal ions (for example, lithium ions). In some embodiments, the cathode active material is a material containing lithium and at least one transition metal. Examples of the cathode active material may include, but are not limited to, lithium transition metal composite oxides and lithium-containing transition metal phosphate compounds.

In some embodiments, the transition metal in the lithium transition metal composite oxides includes V, Ti, Cr, Mn, Fe, Co, Ni, Cu and the like. In some embodiments, the lithium transition metal composite oxides include lithium cobalt composite oxides such as $LiCoO_2$ and the like, lithium nickel composite oxides such as $LiNiO_2$ and the like, lithium manganese composite oxides such as $LiMnO_2$, $LiMn_2O_4$, $Li_2MnO_4$ and the like, and lithium nickel manganese cobalt composite oxides such as $LiNi_{1/3}Mn_{1/3}Co_{1/3}O_2$, $LiNi_{0.5}Mn_{0.3}Co_{0.2}O_2$ and the like, wherein a part of the transition metal atoms as the main body of these lithium transition metal composite oxides are substituted with Na, K, B, F, Al, Ti, V, Cr, Mn, Fe, Co, Li, Ni, Cu, Zn, Mg, Ga, Zr, Si, Nb, Mo, Sn, W and other elements. Examples of the lithium transition metal composite oxides may include, but are not limited to, $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, $LiMn_{1.5}Ni_{0.5}O_4$ and the like. Examples of the combination of the lithium transition metal composite oxides include, but are not limited to, a combination of $LiCoO_2$ and $LiMn_2O_4$, wherein a part of Mn in $LiMn_2O_4$ can be substituted with the transition metal (for example, $LiNi_{0.33}Co_{0.33}Mn_{0.33}O_2$), and a part of Co in $LiCoO_2$ can be substituted with the transition metal.

In some embodiments, the transition metal in the lithium-containing transition metal phosphate compounds includes V, Ti, Cr, Mn, Fe, Co, Ni, Cu and the like. In some embodiments, the lithium-containing transition metal phosphate compounds include iron phosphates such as $LiFePO_4$, $Li_3Fe_2(PO_4)_3$, $LiFeP_2O_7$ and the like, and cobalt phosphates such as $LiCoPO_4$ and the like, wherein a part of the transition metal atoms as the main body of these lithium-containing transition metal phosphate compounds are substituted with Al, Ti, V, Cr, Mn, Fe, Co, Li, Ni, Cu, Zn, Mg, Ga, Zr, Nb, Si and other elements.

In some embodiments, the cathode active material includes lithium phosphate, which may improve the continuous charging characteristics of the electrochemical device. The use of the lithium phosphate is not limited. In some embodiments, the cathode active material and the lithium phosphate are used in combination. In some embodiments, relative to a total weight of the cathode active material and the lithium phosphate, a content of the lithium phosphate is greater than 0.1 wt%, greater than 0.3 wt% or greater than 0.5 wt%. In some embodiments, relative to a total weight of the cathode active material and the lithium phosphate, a content of the lithium phosphate is less than 10 wt%, less than 8 wt% or less than 5 wt%. In some embodiments, the content of the lithium phosphate is within a range formed by any two of the above values.

Surface coating

The surface of the above cathode active material may have a material different from its composition attached. Examples of the surface-attached material may include, but are not limited to, aluminum oxide, silicon dioxide, titanium dioxide, zirconium dioxide, magnesium oxide, calcium oxide, boron oxide, antimony oxide, bismuth oxide and other oxides, lithium sulfate, sodium sulfate, potassium sulfate, magnesium sulfate, calcium sulfate, aluminum sulfate and other sulfates, lithium carbonate, calcium carbonate, magnesium carbonate and other carbonates, carbon, and the like.

These surface-attached materials may be attached to the surface of the cathode active material by the following methods: a method of dissolving or suspending the surface-attached material in a solvent, infiltrating and adding the product to the cathode active material and performing drying; a method of dissolving or suspending a surface-attached material precursor in a solvent, and after infiltrating and adding the product to the cathode active material, performing a reaction by heating and the like; and a method of adding to a cathode active material precursor and performing firing at the same time, and the like. In the case where carbon is attached, a method of mechanically attaching a carbon material (for example, activated carbon and the like) may also be used.

In some embodiments, based on a total weight of the cathode active material layer, a content of the surface-attached material is greater than 0.1 ppm, greater than 1 ppm or greater than 10 ppm. In some embodiments, based on a total weight of the cathode active material layer, a content of the surface-attached material is less than 20%, less than 10% or less than 10%. In some embodiments, based on a total weight of the cathode active material layer, a content of the surface-attached material is within a range formed by any two of the above values.

By attaching the material to the surface of the cathode active material, the oxidation reaction of the electrolyte on the surface of the cathode active material can be suppressed, and the service life of the electrochemical device can be prolonged. When the amount of the surface-attached material is too small, its effect cannot be fully exhibited. When the amount of the surface-attached material is too large, it will hinder the entry and exit of lithium ions, so resistance may sometimes increase.

In the present application, a cathode active material having a material different from its composition attached to the surface of the cathode active material is also referred to as a "cathode active material".

Shape

In some embodiments, the shape of the cathode active material particles includes, but is not limited to, massive, polyhedral, spherical, ellipsoidal, plate-shaped, needle-shaped, columnar and the like. In some embodiments, the cathode active material particles include primary particles, secondary particles or a combination thereof. In some embodiments, the primary particles can aggregate to form secondary particles.

Tap density

In some embodiments, a tap density of the cathode active material is greater than 0.5 g/cm$^3$, greater than 0.8 g/cm$^3$ or greater than 1.0 g/cm$^3$. When the tap density of the cathode active material is within the above range, the amount of a dispersion medium required for the formation of the cathode active material layer and the required amounts of the conductive material and the cathode binder can be suppressed, thereby enhancing the packing rate of the cathode active material and the capacity of the electrochemical device. By using a composite oxide powder with a high tap density, a high-density cathode active material layer can be formed. Typically, the larger the tap density, the more preferable, and there is no particular upper limit. In some embodiments, a tap density of the cathode active material is less than 4.0 g/cm$^3$, less than 3.7 g/cm$^3$ or less than 3.5 g/cm$^3$. When the tap density of the cathode active material has the upper limit as described above, a decrease in load characteristics can be suppressed.

The tap density of the cathode active material may be calculated by the following method: 5 g to 10 g of cathode active material powder is put into a 10 mL glass measuring cylinder, 200 vibrations with a stroke of 20 mm are performed, and the packing density (tap density) of the powder is obtained.

Median particle size (D50)

When the cathode active material particles are primary particles, the median particle size (D50) of the cathode active material particles refers to a primary particle size of the cathode active material particles. When the primary particles of the cathode active material particles aggregate to form secondary particles, the median particle size (D50) of the cathode active material particles refers to a secondary particle size of the cathode active material particles.

In some embodiments, a median particle size (D50) of the cathode active material particles is greater than 0.3 μm, greater than 0.5 μm, greater than 0.8 μm or greater than 1.0 μm. In some embodiments, a median particle size (D50) of the cathode active material particles is less than 30 μm, less than 27 μm, less than 25 μm or less than 22 μm. In some embodiments, the median particle size (D50) of the cathode active material particles is within a range formed by any two of the above values. When the median particle size (D50) of the cathode active material particles is within the above range, a cathode active material with a high tap density can be obtained, and a decrease in the performance of the electrochemical device can be suppressed. On the other hand, during the preparation of the cathode of the electrochemical device (that is, when the cathode active material, the conductive material, the binder and the like are slurried with a solvent and are used for coating in a film form), problems such as the production of stripes can be prevented. Here, by mixing two or more than two types of cathode active materials having different median particle sizes, the packing properties of the cathode during preparation can be further enhanced.

The median particle size (D50) of the cathode active material particles may be measured by using a laser diffraction/scattering particle size distribution measuring device: in the case of using an LA-920 manufactured by HORIBA Ltd. as a particle size distribution meter, a 0.1 wt% sodium hexametaphosphate aqueous solution is used as a dispersion medium for measurement, and after 5 minutes of ultrasonic dispersion, the measurement is performed by setting a measured refractive index at 1.24.

Average primary particle size

In the case where the primary particles of the cathode active material particles aggregate to form secondary particles, in some embodiments, an average primary particle size of the cathode active material is greater than 0.05 μm, greater than 0.1 μm or greater than 0.5 μm. In some embodiments, an average primary particle size of the cathode active material is less than 5 μm, less than 4 μm, less than 3 μm or less than 2 μm. In some embodiments, the average primary particle size of the cathode active material is within a range formed by any two of the above values. When the average primary particle size of the cathode active material is within the above range, the packing properties and specific surface area of the powder can be ensured, a decrease in battery performance can be suppressed, and moderate crystallinity can be obtained, thereby ensuring the charge and discharge reversibility of the electrochemical device.

The average primary particle size of the cathode active material may be obtained by observing an image obtained by a scanning electron microscope (SEM): in the SEM image with a magnification of 10,000 times, for any 50 primary particles, the longest value of the slice obtained from the left and right boundary lines of the primary particles relative to the horizontal straight line is obtained, and the average is calculated, thereby obtaining the average primary particle size.

Specific surface area (BET)

In some embodiments, a specific surface area (BET) of the cathode active material is greater than 0.1 $m^2/g$, greater than 0.2 $m^2/g$ or greater than 0.3 $m^2/g$. In some embodiments, a specific surface area (BET) of the cathode active material is less than 50 $m^2/g$, less than 40 $m^2/g$ or less than 30 $m^2/g$. In some embodiments, the specific surface area (BET) of the cathode active material is within a range formed by any two of the above values. When the specific surface area (BET) of the cathode active material is within the above range, the performance of the electrochemical device can be enhanced, and at the same time, the cathode active material can have good coatability.

The specific surface area (BET) of the cathode active material may be measured by the following method: a surface area meter (for example, a full automatic surface area measuring device manufactured by Okura Riken) is used, the sample is pre-dried at 150°C for 30 minutes under nitrogen flow, and then a nitrogen-helium mixed gas of which the relative pressure value of nitrogen relative to atmospheric pressure is accurately adjusted to 0.3 is used for measurement by a nitrogen adsorption BET single-point method using a gas flow method.

Cathode conductive material

The type of the cathode conductive material is not limited, and any known conductive material may be used. Examples of the cathode conductive material may include, but are not limited to, graphite such as natural graphite, artificial graphite and the like; carbon black such as acetylene black and the like; carbon materials such as needle coke,

amorphous carbon and the like; carbon nanotubes; and graphene and the like. The above cathode conductive materials may be used alone or in any combination.

In some embodiments, based on a total weight of the cathode active material layer, a content of the cathode conductive material is greater than 0.01 wt%, greater than 0.1 wt% or greater than 1 wt%. In some embodiments, based on a total weight of the cathode active material layer, a content of the cathode conductive material is less than 50 wt%, less than 30 wt% or less or less than 15 wt%. When the content of the cathode conductive material is within the above range, sufficient conductivity and capacity of the electrochemical device can be enhanced.

Cathode binder

The type of the cathode binder used in the manufacture of the cathode active material layer is not particularly limited, as long as it is a material that can be dissolved or dispersed in a liquid medium used in the manufacture of the electrode in the case of a coating method. Examples of the cathode binder may include, but are not limited to, one or more of the following: resin polymers such as polyethylene, polypropylene, polyethylene terephthalate, polymethyl methacrylate, polyimide, aromatic polyamide, cellulose, nitrocellulose and the like; rubber-like polymers such as styrene-butadiene rubber (SBR), nitrile-butadiene rubber (NBR), fluororubber, isoprene rubber, butadiene rubber, ethylene-propylene rubber and the like; thermoplastic elastomer-like polymers such as styrene-butadiene-styrene block copolymer or hydrides thereof, ethylene-propylene-diene terpolymer (EPDM), styrene-ethylene-butadiene-ethylene copolymer, styrene-isoprene-styrene block copolymer or hydrides thereof, and the like; soft resin-like polymers such as syndiotactic-1,2-polybutadiene, polyvinyl acetate, ethylene-vinyl acetate copolymer, propylene-$\alpha$-olefin copolymer and the like; fluorine polymers such as polyvinylidene fluoride (PVDF), polytetrafluoroethylene, fluorinated polyvinylidene fluoride, polytetrafluoroethylene-ethylene copolymer and the like; and polymer compositions having ion conductivity of alkali metal ions (particularly lithium ions), and the like. The above cathode binders may be used alone or in any combination.

In some embodiments, based on a total weight of the cathode active material layer, a content of the cathode binder is greater than 0.1 wt%, greater than 1 wt% or greater than 1.5 wt%. In some embodiments, based on a total weight of the cathode active material layer, a content of the cathode binder is less than 80 wt%, less than 60 wt%, less than 40 wt% or less than 10 wt%. When the content of the cathode binder is within the above range, the cathode can have good conductivity and sufficient mechanical strength, and the capacity of the electrochemical device can be enhanced.

Solvent

The type of solvent for forming the cathode slurry is not limited as long as it is a solvent that can dissolve or disperse the cathode active material, the conductive material, the cathode binder and the thickener used as necessary. Examples of the solvent for forming the cathode slurry may include any one of an aqueous solvent and an organic solvent. Examples of the aqueous medium may include, but are not limited to, water and a mixed medium of alcohol and water, and the like. Examples of the organic medium may include, but are not limited to, aliphatic hydrocarbons such as hexane and the like; aromatic hydrocarbons such as benzene, toluene, xylene, methylnaphthalene and the like; heterocyclic compounds such as quinoline, pyridine and the like; ketones such as acetone, methyl ethyl ketone, cyclohexanone and the like; esters such as methyl acetate, methyl acrylate and the like; amines such as diethylenetriamine, N,N-dimethylaminopropylamine and the like; ethers such as diethyl ether, propylene oxide, tetrahydrofuran (THF) and the like; amides such as N-methylpyrrolidone (NMP), dimethylformamide, dimethylacetamide and the like; and aprotic polar solvents such as hexamethylphosphoramide, dimethyl sulfoxide and the like.

Thickener

A thickener is typically used to adjust the viscosity of the slurry. In the case of using an aqueous medium, a thickener and a styrene-butadiene rubber (SBR) latex may be used to perform slurrying. The type of the thickener is not particularly limited, and examples thereof may include, but are not limited to, carboxymethyl cellulose, methyl cellulose, hydroxymethyl cellulose, ethyl cellulose, polyvinyl alcohol, oxidized starch, phosphated starch, casein and salts thereof, and the like. The above thickeners may be used alone or in any combination.

In some embodiments, based on a total weight of the cathode active material layer, a content of the thickener is greater than 0.1 wt%, greater than 0.2 wt% or greater than 0.3 wt%. In some embodiments, based on a total weight of the cathode active material layer, a content of the thickener is less than 5 wt%, less than 3 wt% or less than 2 wt%. In some embodiments, based on a total weight of the cathode active material layer, the content of the thickener is within a range formed by any two of the above values. When the content of the thickener is within the above range, the cathode slurry can have good coatability, and at the same time, a decrease in the capacity of the electrochemical device and an increase in the resistance can be suppressed.

Content of cathode active material

In some embodiments, based on a total weight of the cathode active material layer, a content of the cathode active material is greater than 80 wt%, greater than 82 wt% or greater than 84 wt%. In some embodiments, based on a total weight of the cathode active material layer, a content of the cathode active material is less than 99 wt% or less than 98 wt%. In some embodiments, based on a total weight of the cathode active material layer, the content of the cathode active material is within a range formed by any two of the above values. When the content of the cathode active material is within the above range, the capacitance of the cathode active material in the cathode active material layer can be enhanced, and at the same time, the strength of the cathode can be maintained.

Density of cathode active material

For the cathode active material layer obtained by coating and drying, in order to enhance the packing density of the cathode active material, a compaction treatment may be performed by a manual press, a roll press or the like. In some embodiments, a density of the cathode active material layer is greater than 1.5 g/cm$^3$, greater than 2 g/cm$^3$ or greater than 2.2 g/cm$^3$. In some embodiments, a density of the cathode active material layer is less than 5 g/cm$^3$, less than 4.5 g/cm$^3$ or less than 4 g/cm$^3$. In some embodiments, the density of the cathode active material layer is within a range formed by any two of the above values. When the density of the cathode active material layer is within the above range, the electrochemical device can have good charge and discharge characteristics, and at the same time, an increase in the resistance can be suppressed.

Thickness of cathode active material layer

The thickness of the cathode active material layer refers to a thickness of the cathode active material layer on any one side of a cathode current collector. In some embodiments, a thickness of the cathode active material layer is greater than 10 μm or greater than 20 μm. In some embodiments, a thickness of the cathode active material layer is less than 500 μm or less than 450 μm.

Manufacturing method of cathode active material

The cathode active material may be manufactured by using a common method for manufacturing inorganic compounds. In order to manufacture a spherical or ellipsoidal cathode active material, the following manufacturing method may be used: a raw material of the transition metal is dissolved or pulverized and dispersed in a solvent such as water or the like, the mixture is stirred while the pH is adjusted, a precursor of spheres is manufactured and recovered, and dried as necessary, a Li source such as LiOH, $Li_2CO_3$, $LiNO_3$ or the like is added, and firing is performed at a high temperature to obtain the cathode active material.

2. Cathode current collector

The type of the cathode current collector is not particularly limited, and it may be any known material suitable for use as a cathode current collector. Examples of the cathode current collector may include, but are not limited to, aluminum, stainless steel, a nickel-plated layer, titanium, tantalum and other metal materials; and carbon cloth, carbon paper and other carbon materials. In some embodiments, the cathode current collector is a metal material. In some embodiments, the cathode current collector is aluminum.

The form of the cathode current collector is not particularly limited. When the cathode current collector is a metal material, the form of the cathode current collector may include, but is not limited to, metal foil, a metal cylinder, a metal tape coil, a metal plate, a metal film, expanded metal, stamped metal, foam metal and the like. When the cathode current collector is a carbon material, the form of the cathode current collector may include, but is not limited to, a carbon plate, a carbon film, a carbon cylinder and the like. In some embodiments, the cathode current collector is a metal film. In some embodiments, the metal film is meshy. The thickness of the metal film is not particularly limited. In some embodiments, a thickness of the metal film is greater than 1 μm, greater than 3 μm or greater than 5 μm. In some embodiments, a thickness of the metal film is less than 1 mm, less than 100 μm or less than 50 μm. In some embodiments, the thickness of the metal film is within a range formed by any two of the above values.

In order to reduce the electronic contact resistance of the cathode current collector and the cathode active material layer, the surface of the cathode current collector may include a conductive auxiliary agent. Examples of the conductive auxiliary agent may include, but are not limited to, carbon and precious metals such as gold, platinum, silver and the like.

The thickness ratio of the cathode current collector to the cathode active material layer refers to a ratio of the

thickness of the single-sided cathode active material layer to the thickness of the cathode current collector before the injection of the electrolyte, and the value is not particularly limited. In some embodiments, a thickness ratio of the cathode current collector to the cathode active material layer is less than 20, less than 15 or less than 10. In some embodiments, a thickness ratio of the cathode current collector to the cathode active material layer is greater than 0.5, greater than 0.8 or greater than 1. In some embodiments, the thickness ratio of the cathode current collector to the cathode active material layer is within a range formed by any two of the above values. When the thickness ratio of the cathode current collector to the cathode active material layer is within the above range, the heat release of the cathode current collector during high-current-density charge and discharge can be suppressed, and the capacity of the electrochemical device can be enhanced.

3. Composition and manufacturing method of cathode

The cathode may be manufactured by forming a cathode active material layer containing a cathode active material and a viscous active material on a current collector. The manufacture of the cathode using the cathode active material may be performed by a conventional method, that is, the cathode active material and the viscous active material as well as a conductive material, a thickener and the like as necessary are subjected to dry mixing to obtain a plate, and the obtained plate is pressed onto a cathode current collector; or these materials are dissolved or dispersed in a liquid medium to obtain a slurry, and the slurry is applied to a cathode current collector and dried to form a cathode active material layer on the current collector, thereby obtaining the cathode.

IV. Separator

In order to prevent short circuits, a separator is typically disposed between the cathode and the anode. In this case, the electrolyte of the present application is typically used by infiltrating the separator.

The material and shape of the separator are not particularly limited as long as the effect of the present application is not significantly impaired. The separator may be a resin, a glass fiber, an inorganic substance or the like formed by a material that is stable with the electrolyte of the present application. In some embodiments, the separator includes a material with excellent liquid retention properties in the form of a porous sheet or a non-woven fabric. Examples of the material of the resin or glass fiber separator may include, but are not limited to, polyolefin, aromatic polyamide, polytetrafluoroethylene, polyethersulfone, a glass filter and the like. In some embodiments, the material of the separator is a glass filter. In some embodiments, the polyolefin is polyethylene or polypropylene. In some embodiments, the polyolefin is polypropylene. The above materials of the separator may be used alone or in any combination.

The separator may also be a material laminated with the above materials, and examples thereof include, but are not limited to, a three-layer separator laminated in an order of polypropylene, polyethylene, and polypropylene, and the like.

Examples of the material of the inorganic substance may include, but are not limited to, oxides such as aluminum oxide, silicon dioxide and the like, nitrides such as aluminum nitride, silicon nitride and the like, and sulfates (for example, barium sulfate, calcium sulfate and the like). The form of the inorganic substance may include, but are not limited to, granular or fibrous.

The form of the separator may be a film form, and examples thereof include, but are not limited to, a non-woven fabric, a woven fabric, a microporous membrane and the like. In the film form, the separator has a pore size of 0.01 μm to 1 μm and a thickness of 5 μm to 50 μm. In addition to the above independent film-like separator, the following separator may be used: a separator formed by forming a composite porous layer containing the above inorganic substance particles on the surface of the cathode and/or anode by using a resin binder, for example, a separator formed by forming porous layers on two surfaces of the cathode from aluminum oxide particles with a 90% particle size of less than 1 μm by using a fluororesin as a binder.

The thickness of the separator is arbitrary. In some embodiments, a thickness of the separator is greater than 1 μm, greater than 5 μm or greater than 8 μm. In some embodiments, a thickness of the separator is less than 50 μm, less than 40 μm or less than 30 μm. In some embodiments, the thickness of the separator is within a range formed by any two of the above values. When the thickness of the separator is within the above range, insulativity and mechanical strength can be ensured, and rate characteristics and energy density of the electrochemical device can be enhanced.

When a porous material in the form of a porous sheet or a non-woven fabric or the like is used as the separator, the porosity of the separator is arbitrary. In some embodiments, a porosity of the separator is greater than 20%, greater than 35% or greater than 45%. In some embodiments, a porosity of the separator is less than 90%, less than 85% or less than 75%. In some embodiments, the porosity of the separator is within a range formed by any two of the above values. When the porosity of the separator is within the above range, insulativity and mechanical strength can be ensured, and membrane resistance can be suppressed, so that the electrochemical device has good rate characteristics.

The average pore size of the separator is also arbitrary. In some embodiments, an average pore size of the

separator is less than 0.5 μm or less than 0.2 μm. In some embodiments, an average pore size of the separator is greater than 0.05 μm. In some embodiments, the average pore size of the separator is within a range formed by any two of the above values. If the average pore size of the separator exceeds the above range, a short circuit may easily occur. When the average pore size of the separator is within the above range, membrane resistance can be suppressed while a short circuit is prevented, so that the electrochemical device has good rate characteristics.

V. Electrochemical device module

The electrochemical device module includes an electrode assembly, a current collecting structure, an outer shell and a protective element.

Electrode assembly

The electrode assembly may be any one of a laminated structure laminated from the cathode and the anode described above separated by the above separator, and a structure spirally wound from the cathode and the anode described above separated by the above separator. In some embodiments, a proportion of the mass of the electrode assembly in the internal volume of the battery (electrode assembly occupancy) is greater than 40% or greater than 50%. In some embodiments, an electrode assembly occupancy is less than 90% or less than 80%. In some embodiments, the electrode assembly occupancy is within a range formed by any two of the above values. When the electrode assembly occupancy is within the above range, the capacity of the electrochemical device can be enhanced, and at the same time, a decrease in characteristics such as repeated charge and discharge performance and high-temperature storage performance accompanying the increase in internal pressure can be suppressed, thereby preventing the operation of a gas release valve.

Current collecting structure

The current collecting structure is not particularly limited. In some embodiments, the current collecting structure is a structure that reduces the resistance of a wiring portion and a bonding portion. When the electrode assembly is the above laminated structure, it is suitable to use a structure formed by bundling the metal core portion of each electrode layer and welding the bundle to a terminal. When the area of one electrode increases, the internal resistance increases, so it is also suitable to dispose two or more than two terminals in the electrode to reduce the resistance. When the electrode assembly is the above wound structure, by disposing two or more than two lead structures respectively on each of the cathode and the anode and bundling them on the terminals, the internal resistance can be reduced.

Outer shell

The material of the outer shell is not particularly limited, as long as it is stable with the electrolyte used. The outer shell may be, but is not limited to, a nickel-plated steel plate, stainless steel, aluminum or aluminum alloy, magnesium alloy and other metals, or a laminated film of resin and aluminum foil. In some embodiments, the outer shell is a metal or laminated film of aluminum or an aluminum alloy.

The metal outer shell includes, but is not limited to, a package sealed structure formed by fusing metals to each other by laser welding, resistance welding or ultrasonic welding; or a riveted structure formed by using the above metals separated by a resin gasket. The outer shell using the above laminated film includes, but is not limited to, a package sealed structure formed by thermally bonding resin layers to each other, and the like. In order to enhance the sealability, a resin different from the resin used in the laminated film may be sandwiched between the above resin layers. When the resin layers are thermally bonded through a current collecting terminal to form a sealed structure, a resin having a polar group or a modified resin having a polar group introduced may be used as the sandwiched resin due to the bonding of the metal and the resin. In addition, the shape of the outer shell is also arbitrary, and may be, for example, any one of a cylindrical shape, a square shape, a laminated type, a button type, a large type and the like.

Protective element

The protective element may be a positive temperature coefficient (PTC), a temperature fuse or a thermistor whose resistance increases when abnormal heat is released or excessive current flows, a valve (current cutoff valve) that cuts off the current flowing in the circuit by rapidly increasing the internal pressure or the internal temperature of the battery when abnormal heat is released, or the like. The above protective element may be an element that does not operate during normal use at a high current, and may also be designed in such a manner that abnormal heat release or thermal runaway may not occur even if there is no protective element.

VI. Application

The electrochemical device of the present application includes any device where an electrochemical reaction occurs, and its specific examples include all types of primary batteries, secondary batteries, fuel cells, solar cells or capacitors. In particular, the electrochemical device is a lithium secondary battery, including a lithium metal secondary battery, a lithium-ion secondary battery, a lithium polymer secondary battery or a lithium ion polymer secondary battery.
The present application further provides an electronic device, including the electrochemical device according to the present application.
The use of the electrochemical device of the present application is not particularly limited and it may be used in any electronic device known in the prior art. In some embodiments, the electrochemical device of the present application may be used in, but is not limited to, a notebook computer, a pen input computer, a mobile computer, an e-book player, a portable phone, a portable fax machine, a portable copying machine, a portable printer, stereo headphones, a video recorder, a liquid crystal display television, a portable cleaner, a portable CD player, a minidisc player, a transceiver, an electronic notebook, a calculator, a memory card, a portable recorder, a radio, a backup power supply, a motor, a car, a motorcycle, an electric bicycle, a bicycle, a lighting fixture, a toy, a game console, a clock, an electric tool, a flash light, a camera, a large household storage battery, a lithium-ion capacitor and the like.
Hereinafter, the preparation of the lithium-ion battery is described by taking the lithium-ion battery as an example and in conjunction with specific embodiments. Those skilled in the art will understand that the preparation methods described in the present application are only examples, and any other suitable preparation methods are within the scope of the present application.

## Examples

The performance evaluation of the examples of the lithium-ion battery according to the present application and comparative examples will be described below.

### I. Preparation of lithium-ion battery

1. Preparation of anode

Artificial graphite, styrene-butadiene rubber and carboxymethylcellulose sodium were mixed according to a mass ratio of 96%:2%:2% with deionized water, 2,000 ppm of an auxiliary agent was added, and the mixture was stirred uniformly to obtain an anode slurry. A 12 μm copper foil was coated with the anode slurry, dried, cold-pressed, and then subjected to slice cutting and tab welding to obtain an anode. The anode was disposed according to the conditions of the following examples and comparative examples such that it had the corresponding parameters.
The auxiliary agents used in the following embodiments are as follows:

| | Name (Trade Name) |
|---|---|
| Auxiliary Agent 1 | Trisiloxane surfactant (CAS No. 3390-61-2) |
| Auxiliary Agent 2 | Organosilicon surfactant (Sylgard 309) |
| Auxiliary Agent 3 | Dihydroxy polydimethylsiloxane (PMX-0156) |
| Auxiliary Agent 4 | N-β-aminoethyl-Y-aminopropyldimethoxymethylsilane (KH-602) |
| Auxiliary Agent 5 | Methyl silicone oil polydimethylsiloxane (CAS No. 63148-62-9) |

2. Preparation of cathode

Lithium cobalt oxide ($LiCoO_2$), a conductive material (Super-P) and polyvinylidene fluoride (PVDF) were mixed according to a mass ratio of 95%:2%:3% with N-methylpyrrolidone (NMP), and stirred uniformly to obtain a cathode slurry. A 12 μm aluminum foil was coated with the cathode slurry, dried, cold-pressed, and then subjected to slice cutting and tab welding to obtain a cathode.

3. Preparation of electrolyte

Under a dry argon atmosphere, EC, PC and DEC (weight ratio 1:1:1) were mixed, and $LiPF_6$ was added and mixed uniformly to form a base electrolyte, wherein the concentration of $LiPF_6$ was 1.15 mol/L. Different amounts of

additive were added to the base electrolyte to obtain electrolytes of different embodiments and comparative examples.

| Material Name | Abbr. | Material Name | Abbr. |
|---|---|---|---|
| Ethylene carbonate | EC | Propylene carbonate | PC |
| Diethyl carbonate | DEC | Ethyl propionate | EP |
| Propyl propionate | PP | $\gamma$-butyrolactone | GBL |
| Succinonitrile | SN | Adiponitrile | ADN |
| Ethylene glycol bis(2-cyanoethyl)ether | EDN | 1,3,6-hexanetricarbonitrile | HTCN |
| 1,2,3-tris(2-cyanoethoxy)propane | TCEP | Lithium difluorophosphate | $LiPO_2F_2$ |

4. Preparation of separator

A polyethylene (PE) porous polymer film was used as a separator.

5. Preparation of lithium-ion battery

The obtained cathode, separator and anode were wound in order, and placed in an outer packaging foil, leaving a liquid injection port. The lithium-ion battery was obtained by injecting the electrolyte into the liquid injection port, performing encapsulation, and then performing processes such as formation and capacity.

**II. Test methods**

1. Test method for contact angle of anode active material layer relative to non-aqueous solvent

3 microliters of diethyl carbonate were dropwise added to the surface of the anode active material layer, testing was performed by using a JC2000D3E contact angle measuring instrument within 100 seconds, and a 5-point fitting method (that is, 2 points on the left and right planes of the droplet were taken first to determine a liquid-solid interface, and then 3 points were taken on the arc of the droplet) was used for fitting to obtain the contact angle of the anode active material layer relative to the non-aqueous solvent. Each sample was measured at least 3 times, and at least 3 data samples with a difference of less than 5° were selected and averaged to obtain the contact angle of the anode active material layer relative to the non-aqueous solvent.

(2) Test method for capacity retention rate after cycle of lithium-ion battery

At 45°C, the lithium-ion battery was charged at a constant current of 1 C to 4.45 V, then charged at a constant voltage of 4.45 V to a current of 0.05 C, and discharged at a constant current of 1 C to 3.0 V, which was the first cycle. The lithium-ion battery was subjected to 200 cycles under the above conditions. "1 C" refers to a current value at which the lithium-ion battery capacity is completely discharged within 1 hour.

The capacity retention rate after cycle of the lithium-ion battery was calculated by the following formula:

Capacity retention rate after cycle = (discharge capacity of corresponding number of cycles/discharge capacity of first cycle)×100%.

3. Test method for high-temperature storage thickness swelling rate of lithium-ion battery

At 25°C, the lithium-ion battery was allowed to stand for 30 minutes, then charged at a constant current of 0.5 C to 4.45 V, charged at a constant voltage of 4.45 V to 0.05 C, and allowed to stand for 5 minutes, and the thickness was measured. After storage at 60°C for 21 days, the thickness of the battery was measured. The high-temperature storage thickness swelling rate of the lithium-ion battery was calculated by the following formula:

High-temperature storage thickness swelling rate = [(thickness after storage-thickness before storage)/thickness before storage]×100%.

### III. Test results

Table 1 shows the contact angle of the anode active material layer relative to the non-aqueous solvent and the components and contents in the electrolyte in the examples and comparative examples, and shows the cycle performance and high-temperature storage performance of the obtained lithium-ion batteries. In Table 1, 2,000 ppm of Auxiliary Agent 1 was added in each of the examples. The electrolyte used in Comparative Examples 1 and 6 was a mixture of EC, PC and DEC (weight ratio 1:1:1), wherein the concentration of $LiPF_6$ is 1.15 mol/L.

Table 1

| | Electrolyte | | Contact Angle of Anode Active Material Layer Relative to Non-aqueous Solvent | Performance of Lithium-ion Battery | |
|---|---|---|---|---|---|
| | Component | Content (wt%) | | Capacity Retention Rate After Cycle | High-temperature Storage Thickness Swelling Rate |
| Comparative Example 1 | / | / | 70° | 45.3% | 36.7% |
| Comparative Example 2 | PP | 5 | 70° | 53.6% | 33.4% |
| Comparative Example 3 | ADN | 1 | 70° | 56.2% | 28.8% |
| Comparative Example 4 | $LiPO_2F_2$ | 0.1 | 70° | 62.8% | 29.3% |
| Comparative Example 5 | Formula 1-1 | 1 | 70° | 59.7% | 32.1% |
| Comparative Example 6 | / | / | 30° | 69.2% | 29.1% |
| Example 1 | PP | 5 | 60° | 75.3% | 18.4% |
| Example 2 | PP | 15 | 50° | 78.5% | 16.7% |
| Example 3 | PP | 30 | 30° | 82.8% | 17.1% |
| Example 4 | EP | 5 | 60° | 72% | 19.9% |
| Example 5 | EP | 15 | 50° | 75.3% | 17.6% |
| Example 6 | EP | 30 | 30° | 79.6% | 23.3% |
| Example 7 | ADN | 1 | 60° | 75.9% | 13.5% |
| Example 8 | ADN | 3 | 50° | 78.5% | 7.4% |
| Example 9 | ADN | 5 | 30° | 83.6% | 6.9% |
| Example 10 | EDN | 1 | 60° | 79.1% | 8.7% |
| Example 11 | EDN | 3 | 50° | 81.9% | 6.5% |
| Example 12 | EDN | 5 | 30° | 78.2% | 5.3% |
| Example 13 | HTCN | 1 | 60° | 83.3% | 7.4% |
| Example 14 | HTCN | 3 | 50° | 85.4% | 5.6% |
| Example 15 | HTCN | 5 | 30° | 78.6% | 3.6% |
| Example 16 | TCEP | 1 | 60° | 84.6% | 6.9% |

(continued)

| | Electrolyte | | Contact Angle of Anode Active Material Layer Relative to Non-aqueous Solvent | Performance of Lithium-ion Battery | |
|---|---|---|---|---|---|
| | Component | Content (wt%) | | Capacity Retention Rate After Cycle | High-temperature Storage Thickness Swelling Rate |
| Example 17 | TCEP | 3 | 50° | 86.5% | 4.8% |
| Example 18 | TCEP | 5 | 30° | 86.8% | 3.4% |
| Example 19 | $LiPO_2F_2$ | 0.1 | 60° | 78.7% | 12.2% |
| Example 20 | $LiPO_2F_2$ | 0.3 | 50° | 83.8% | 10.9% |
| Example 21 | $LiPO_2F_2$ | 0.5 | 30° | 82.9% | 7.5% |
| Example 22 | Formula 1-1 | 0.1 | 60° | 77.4% | 11.8% |
| Example 23 | Formula 1-1 | 0.3 | 50° | 83.7% | 8.6% |
| Example 24 | Formula 1-1 | 0.5 | 30° | 85.2% | 7.8% |

As shown in Comparative Example 1, when a conventional anode (that is, the contact angle of the anode active material layer relative to the non-aqueous solvent was greater than 60°) and a conventional electrolyte were used, cycle performance and high-temperature storage performance of the lithium-ion battery were poor. As shown in Comparative Examples 2 to 5, when the electrolyte of the present application and a conventional anode (that is, the contact angle of the anode active material layer relative to the non-aqueous solvent was greater than 60°) were used, improvement of the cycle performance and high-temperature storage performance of the lithium-ion battery was very limited. As shown in Comparative Example 6, when the anode of the present application (that is, the contact angle of the anode active material layer relative to the non-aqueous solvent was not greater than 60°) and a conventional electrolyte were used, the capacity retention rate after cycle of the lithium-ion battery was significantly improved, but an improvement in high-temperature storage performance was not significant. As shown in Examples 1 to 24, when the electrolyte and the anode of the present application (the contact angle of the anode active material layer relative to the non-aqueous solvent was not greater than 60°) were used at the same time, the capacity retention rate after cycle of the lithium-ion battery was significantly increased, and the high-temperature storage thickness swelling rate was significantly reduced, that is, the cycle performance and high-temperature storage performance of the lithium-ion battery could be significantly improved at the same time.

Table 2 shows the effects of different combinations of components of the electrolyte of the present application on the cycle performance and high-temperature storage performance of the lithium-ion batteries. In the examples and comparative example of Table 2, the contact angle of the anode active material layer relative to the non-aqueous solvent was 30°. In Table 2, 2,000 ppm of Auxiliary Agent 1 was added in each of the examples. The electrolyte used in Comparative Example 7 was a mixture of EC, PC and DEC (weight ratio 1:1:1), wherein the concentration of $LiPF_6$ was 1.15 mol/L.

Table 2

| | Electrolyte Component | | | | Performance of Lithium-ion Battery | |
|---|---|---|---|---|---|---|
| | Component 1 (20 wt%) | Component 2 (2 wt%) | Component 3 (1 wt%) | Component 4 (1 wt%) | Capacity Retention Rate After Cycle | High-temperature Storage Thickness Swelling Rate |
| Comparative Example 6 | / | / | / | / | 69.2% | 26.1% |
| Example 25 | PP | SN | / | / | 82.2% | 7.6% |
| Example 26 | PP | ADN | / | / | 83.3% | 6.3% |
| Example 27 | PP | EDN | / | / | 83.8% | 5.8% |
| Example 28 | PP | HTCN | / | / | 85.5% | 4.9% |
| Example 29 | PP | TCEP | / | / | 84.1% | 4.2% |

(continued)

| | Electrolyte Component | | | | Performance of Lithium-ion Battery | |
|---|---|---|---|---|---|---|
| | Component 1 (20 wt%) | Component 2 (2 wt%) | Component 3 (1 wt%) | Component 4 (1 wt%) | Capacity Retention Rate After Cycle | High-temperature Storage Thickness Swelling Rate |
| Example 30 | / | SN | $LiPO_2F_2$ | / | 83.4% | 6.5% |
| Example 31 | / | SN | / | Formula 1-1 | 84.6% | 5.9% |
| Example 32 | / | ADN | $LiPO_2F_2$ | / | 83.5% | 5.3% |
| Example 33 | / | ADN | / | Formula 1-1 | 84.7% | 5.5% |
| Example 34 | / | EDN | $LiPO_2F_2$ | / | 85.3% | 4.7% |
| Example 35 | / | EDN | / | Formula 1-1 | 86.3% | 4.6% |
| Example 36 | / | HTCN | $LiPO_2F_2$ | / | 86.4% | 4.3% |
| Example 37 | / | HTCN | / | Formula 1-1 | 87.1% | 4.1% |
| Example 38 | / | TCEP | $LiPO_2F_2$ | / | 88.3% | 3.8% |
| Example 39 | / | TCEP | / | Formula 1-1 | 88.6% | 3.2% |
| Example 40 | PP | SN | $LiPO_2F_2$ | / | 85.4% | 7.1% |
| Example 41 | PP | SN | / | Formula 1-1 | 86.1% | 6.8% |
| Example 42 | PP | ADN | $LiPO_2F_2$ | / | 85.8% | 6.7% |
| Example 43 | PP | ADN | / | Formula 1-1 | 86.4% | 6.1% |
| Example 44 | PP | EDN | $LiPO_2F_2$ | / | 86.8% | 5.5% |
| Example 45 | PP | EDN | | Formula 1-1 | 87.6% | 5.3% |
| Example 46 | PP | HTCN | $LiPO_2F_2$ | / | 87.5% | 5.3% |
| Example 47 | PP | HTCN | / | Formula 1-1 | 89.6% | 5.1% |
| Example 48 | PP | TCEP | $LiPO_2F_2$ | / | 88.8% | 4.2% |
| Example 49 | PP | TCEP | / | Formula 1-1 | 90.4% | 3.7% |

The results show that under the condition that the contact angle of the anode active material layer relative to the non-aqueous solvent was 30°, different combinations of the components could all significantly improve the capacity retention rate after cycle and the high-temperature storage thickness swelling rate of the lithium-ion battery. Further, when the propionate, the compound having a cyano group(s), $LiPO_2F_2$ or the compound of Formula 1 was used in combination, a more excellent effect could be obtained because the interface film formed after use in combination had good stability and was not easily decomposed during the cycle, thereby enhancing the cycle performance.

Table 3 shows the effects of the auxiliary agents in the anode active material layer on the cycle performance and high-temperature storage performance of the lithium-ion batteries. In the examples of Table 3, the contact angle of the anode active material layer relative to the non-aqueous solvent was 30°. In Table 3, 2,000 ppm of different auxiliary agents were added in each of the embodiments.

Table 3

| | | Electrolyte | | Performance of Lithium-ion Battery | |
|---|---|---|---|---|---|
| | Auxiliary Agent (2,000 ppm) | Component | Content (wt%) | Capacity Retention Rate After Cycle | High-temperature Storage Thickness Swelling Rate |
| Example 50 | Auxiliary Agent 2 | PP | 30 | 85.1% | 7.5% |

(continued)

| | | Electrolyte | | Performance of Lithium-ion Battery | |
|---|---|---|---|---|---|
| | Auxiliary Agent (2,000 ppm) | Component | Content (wt%) | Capacity Retention Rate After Cycle | High-temperature Storage Thickness Swelling Rate |
| Auxiliaries 51 | Auxiliary Agent 3 | HTCN | 2 | 84.3% | 5.7% |
| Auxiliaries 52 | Auxiliary Agent 4 | TCEP | 2 | 83.8% | 6% |
| Auxiliaries 53 | Auxiliary Agent 5 | SN | 4 | 85.7% | 7.1% |

The results show that, under the condition that the contact angle of the anode active material layer relative to the non-aqueous solvent was 30°, adding different auxiliary agents to the anode active material layer could also make the structure configuration of the anode more orderly, and the combination with the electrolyte of the present application could further enhance the capacity retention rate after cycle and the high-temperature storage thickness swelling rate of the lithium-ion battery.

References throughout the specification to "embodiments," "partial embodiments," "one embodiment," "another example," "examples," "specific examples" or "partial examples" mean that at least one embodiment or example of the present application includes specific features, structures, materials or characteristics described in the embodiment or example. Therefore, descriptions appearing throughout the specification, for example, "in some embodiments," "in the embodiments," "in an embodiment," "in another example," "in an example," "in a specific example" or "examples," are not necessarily referring to the same embodiment or example in the present application. In addition, the specific features, structures, materials or characteristics herein can be combined in any suitable manner in one or more embodiments or examples.

Although the illustrative embodiments have been shown and described, it should be understood by those skilled in the art that the above embodiments cannot be interpreted as limitations to the present application, and the embodiments can be changed, substituted and modified without departing from the spirit, principle and scope of the present application.

**Claims**

1. An electrochemical device, comprising a cathode, an electrolyte and an anode, wherein the electrolyte comprises at least one of the following compounds:

    a) propionate;
    b) a compound having a cyano group(s);
    c) lithium difluorophosphate; or
    d) a compound of Formula 1:

    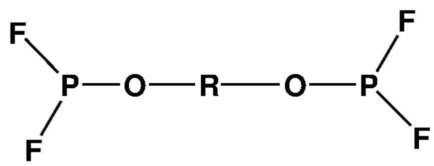 Formula 1,

    wherein,

    R is substituted or unsubstituted $C_1$-$C_{10}$ hydrocarbyl, and when substituted, the substituent is halogen; and the anode comprises an anode active material layer, and a contact angle of the anode active material layer relative to a non-aqueous solvent is not greater than 60° as measured by a contact angle measurement.

2. The electrochemical device according to claim 1, wherein a droplet diameter of the non-aqueous solvent on the anode active material layer is not greater than 30 mm as measured by a contact angle measurement.

3. The electrochemical device according to claim 1, wherein the contact angle measurement means that after a 3-microliter droplet of diethyl carbonate is dropwise added to a surface of the anode active material layer, a contact angle of the droplet on the surface of the anode active material layer is tested within 100 seconds.

4. The electrochemical device according to claim 1, wherein the anode active material layer further comprises an auxiliary agent, the auxiliary agent having at least one of the following features:

a) an oxidation potential of not less than 4.5 V and a reduction potential of not greater than 0.5 V; or
b) a surface tension of not greater than 30 mN/m.

5. The electrochemical device according to claim 1, wherein the anode active material layer further comprises a nonionic surfactant.

6. The electrochemical device according to claim 4 or 5, wherein, based on a total weight of the anode active material layer, a content of the auxiliary agent or the nonionic surfactant is less than 3,000 ppm.

7. The electrochemical device according to claim 4, wherein the auxiliary agent comprises at least one of polyoxyethylene ether, polyol ester, amide, block polyether, peregal, polyether or sodium hexadecylbenzenesulfonate; preferably at least one of the following:
polyoxyethylene alkanolamide, octyl phenol polyoxyethylene ether, nonyl phenol polyoxyethylene ether, higher fatty alcohol polyoxyethylene ether, polyoxyethylene fatty acid ester, polyoxyethylene amine, alkanolamide, polyoxyethylene lauryl ether, C12-14 primary alcohol polyoxyethylene ether, C12-14 secondary alcohol polyoxyethylene ether, branched C13 Guerbet alcohol polyoxyethylene ether, branched C10 Guerbet alcohol polyoxyethylene, linear C10 alcohol polyoxyethylene ether, linear C8 octanol polyoxyethylene ether, linear C8 isooctanol polyoxyethylene ether, fatty acid monoglyceride, glycerin monostearate, fatty acid sorbitan ester, composite silicone polyether compound, polysorbate, polyoxyethylene fatty acid ester, polyoxyethylene fatty alcohol ether, polyoxyethylene-polyoxypropylene block copolymer, polyether modified trisiloxane or polyether modified organosilicon polyether siloxane.

8. The electrochemical device according to claim 1, wherein the propionate has Formula 2:

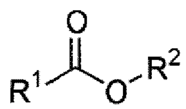 Formula 2,

wherein:

$R^1$ is selected from ethyl or haloethyl, and
$R^2$ is selected from $C_1$-$C_6$ alkyl or $C_1$-$C_6$ haloalkyl.

9. The electrochemical device according to claim 1, wherein the propionate comprises at least one of methyl propionate, ethyl propionate, propyl propionate, butyl propionate or amyl propionate.

10. The electrochemical device according to claim 1, wherein the compound having a cyano group(s) comprises a structure of at least one of Formula 3, Formula 4, Formula 5 or Formula 6:

$A^1$-CN Formula 3,

NC-$A^2$-CN Formula 4,

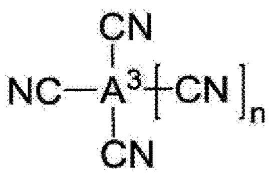 Formula 5,

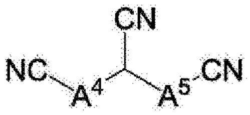

Formula 6,

wherein:

$A^1$ is selected from the group consisting of $C_{2-20}$ alkyl, $C_{2-20}$ haloalkyl, $C_{2-20}$ alkenyl, $C_{2-20}$ haloalkenyl, $C_{2-20}$ alkynyl, $C_{2-20}$ haloalkynyl, $C_{6-30}$ aryl and $C_{6-30}$ haloaryl;

$A^2$ is selected from the group consisting of $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene, $C_{6-30}$ haloarylene, carbonyl, sulfonyl, sulfinyl, ether, thioether, dialkyl borate and boryl;

$A^3$ is selected from the group consisting of $C_{2-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene, $C_{6-30}$ haloarylene and $C_{2-20}$ alkoxy;

$A^4$ and $A^5$ are each independently selected from the group consisting of $C_{1-20}$ alkylene, $C_{2-20}$ haloalkylene, $C_{2-20}$ alkenylene, $C_{2-20}$ haloalkenylene, $C_{2-20}$ alkynylene, $C_{2-20}$ haloalkynylene, $C_{6-30}$ arylene and $C_{6-30}$ haloarylene; and

n is an integer from 0 to 5.

**11.** The electrochemical device according to claim 1, wherein the compound having a cyano group(s) is selected from at least one of the following: succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,4-dicyanopentane, 1,2-dicyanobenzene, 1,3-dicyanobenzene, 1,4-dicyanobenzene, ethylene glycol bis(propionitrile)ether, 3,5-dioxa-heptanedinitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane or 1,2,5-tris(cyanoethoxy)pentane.

**12.** The electrochemical device according to claim 1, wherein the compound of Formula 1 comprises at least one of 1,2-bis(difluorophosphoryloxy)ethane, 1,2-bis(difluorophosphoryloxy)propane or 1,2-bis(difluorophosphoryloxy)butane.

**13.** An electronic device, comprising the electrochemical device according to any of claims 1 to 12.

**INTERNATIONAL SEARCH REPORT**

International application No.
**PCT/CN2019/128447**

**A. CLASSIFICATION OF SUBJECT MATTER**

H01M 10/0567(2010.01)i; H01M 4/583(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 电解液, 负极活性物质层, 接触角, 丙酸酯, 腈, 氰, 二氟磷酸锂, 二氟磷氧, battery, electrolyte, anode, “contact angle”, propionate, cyano+

**C. DOCUMENTS CONSIDERED TO BE RELEVANT**

| Category* | Citation of document, with indication, where appropriate, of the relevant passages | Relevant to claim No. |
|---|---|---|
| X | JP 2002260636 A (MATSUSHITA DENKI SANGYO KK et al.) 13 September 2002 (2002-09-13)<br>description, paragraphs 0008-0046, table 2 | 1, 3, 8-10, 13 |
| A | CN 103582973 A (MATSUSHITA ELECTRIC INDUSTRY CO., LTD.) 12 February 2014 (2014-02-12)<br>entire document | 1-13 |
| A | JP 2007103198 A (SONY CORP.) 19 April 2007 (2007-04-19)<br>entire document | 1-13 |
| A | JP 2019175657 A (TDK CORPORATION) 10 October 2019 (2019-10-10)<br>entire document | 1-13 |

☐ Further documents are listed in the continuation of Box C. ☑ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **16 July 2020** | **31 August 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2019/128447**

| Patent document cited in search report | | | Publication date (day/month/year) | Patent family member(s) | | | Publication date (day/month/year) |
|---|---|---|---|---|---|---|---|
| JP | 2002260636 | A | 13 September 2002 | None | | | |
| CN | 103582973 | A | 12 February 2014 | US | 9484599 | B2 | 01 November 2016 |
| | | | | WO | 2013031226 | A1 | 07 March 2013 |
| | | | | CN | 103582973 | B | 17 August 2016 |
| | | | | JP | 5793689 | B2 | 14 October 2015 |
| | | | | US | 2014178732 | A1 | 26 June 2014 |
| | | | | JP | WO2013031226 | A1 | 23 March 2015 |
| JP | 2007103198 | A | 19 April 2007 | JP | 5082221 | B2 | 28 November 2012 |
| JP | 2019175657 | A | 10 October 2019 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 3390-61-2
- *CHEMICAL ABSTRACTS,* 63148-62-9